# EUROPEAN PATENT SPECIFICATION

(11) **EP 1 269 680 B1**
(45) Date of publication and mention of the grant of the patent: **17.10.2007**
(21) Application number: 01917262.6
(22) Date of filing: 30.03.2001
(51) Int. Cl.: H04L 9/12

(54) **MOBILE RADIO COMMUNICATION SYSTEM**
MOBILFUNK-KOMMUNIKATIONSSYSTEM
SYSTEME MOBILE DE RADIOCOMMUNICATION

(30) Priority: 31.03.2000 GB 0007874
(43) Date of publication of application: 02.01.2003
(73) Proprietor: Sepura Limited, Cambridge CB4 1GR (GB)
(72) Inventor: RAYNE, Mark, Wentworth, Near Ely, Cambridgeshire CB6 3ND (GB)
(74) Representative: Tothill, John Paul
(86) International application number: PCT/GB2001/001451
(87) International publication number: WO 2001/076125

(56) References cited:
- US-A- 5 164 986
- ELLIS ET AL: "Key management engine techniques for sensitive or classified equipment initialization" MILITARY COMMUNICATIONS CONFERENCE, 1993. MILCOM '93. CONFERENCE RECORD. COMMUNICATIONS ON THE MOVE., IEEE BOSTON, MA, USA 11-14 OCT. 1993, NEW YORK, NY, USA,IEEE, US, 11 October 1993 (1993-10-11), pages 354-358, XP010142776 ISBN: 0-7803-0953-7

## Description

This invention relates to a mobile radio communication system in which transmissions are encrypted using encryption keys and, in particular, to a mobile radio unit, mobile radio communication system and method of operating the same in which the deletion of encryption keys from mobile radio units is reported to a key management controller.

Many mobile radio communication systems employ encryption keys to encrypt transmissions and keep communications secure. In general, transmissions are encrypted using encryption keys known to both the transmitting and receiving parties. The transmission is encrypted by the transmitting party using an encryption key and decrypted by the receiving party using the same or a corresponding encryption key. Thus, in order to ensure that such transmissions remain secure, it is important that the encryption keys are only known to authorised transmitting and receiving parties.

Various methods can be used to prevent the encryption keys from being compromised, i.e. to keep the encryption keys secure and prevent third parties from obtaining the keys and using them to transmit or receive signals over the system. For example, encryption keys might be stored in mobile stations in an encrypted form. In another example, the mobile radio unit may be able to delete the encryption keys it stores if an unauthorised person attempts to read the encryption keys from the memory in which they are stored. In order to achieve this, tamper detection circuitry may be provided around a memory location in which the encryption keys are stored, or even simply around the cover of the radio unit, such that any unauthorised attempt to access the memory or the inside of the radio unit triggers deletion of encryption keys.

In yet another example, the mobile unit may be operable by a user to delete the encryption keys. The user can thus delete the encryption keys when it is desired to hand over the radio unit to a third party who is not authorised to use the encryption keys stored in the radio unit, e.g. is not a member of the call group of the user or is not authorised to use the communication system. Similarly, a user may be able to initiate deletion the encryption key in an emergency if he is about to lose possession of the radio unit against his will.

ELLIS ET AL: 'Key management engine techniques for sensitive or classified equipment initialization' MILITARY COMMUNICATIONS CONFERENCE, 1993. MILCOM '93. CONFERENCE RECORD. COMMUNICATIONS ON THE MOVE., IEEE BOSTON, MA, USA 11-14 Oct. 1993, NEW YORK, NY, USA, IEEE, US, 11 October 1993 (1993-10-11), pages 354-358, XP010142776 ISBN: 0-7803-0953-7 describes a key management system in which users can delete keys in their mobile radio units. The preambles to the independent claims are based on this document. US-A-5164986 describes an arrangement for sending over-the-air rekeying messages in a communications system.

However, no system for protecting encryption keys stored in mobile radio units from disclosure to third parties is entirely secure so, whenever it is suspected that an encryption key has been compromised, in order to fully maintain system security, if may be necessary to start using a different encryption key and discard the possibly compromised encryption key. For this purpose, systems have been proposed in which a key management system keeps a record of the previous and present use of the encryption keys, such as in which mobile radio units they are or have been stored. If a mobile radio unit is tampered with or lost, the key management system can determine which keys are or were stored in the tampered with or lost mobile unit and discard them appropriately. It is therefore important that, where an encryption key is compromised, the key management system becomes aware of this so it can stop use of the compromised key and discard it as necessary. The quicker this occurs and the greater the reliability of the determination that a key has been compromised, the more secure the communication system.

However, such systems are prone to unnecessarily discarding relatively large numbers of encryption keys as it is difficult to determine with any certainty when an encryption key has actually been compromised and when it has not, and the key management system does not therefore know when it is really necessary to discard an encryption key. In particular, mobile units can often be minimally tampered with, temporarily lost or temporarily come into the hands of an unauthorised user without the encryption keys actually becoming known to an unauthorised user. However, in known arrangements the key management system is typically unable to distinguish between this and the genuine unauthorised disclosure of an encryption key and so therefore has to discard the encryption key regardless.

Such potentially unnecessary discarding of large numbers of encryption keys by a key management system can incur significant costs, since encryption keys are becoming increasingly complex and key generators for generating the encryption keys are becoming similarly increasingly complex, with commensurate increases in costs. For example, modern encryption keys and encryption key generators must have a number of properties, such as: it being sufficiently difficult to predict newly generated keys from knowledge of previously generated keys and to predict a part of a key from knowledge of other parts of that key; the avoidance of the generation of any keys in a group of generated keys which only weakly encrypt data; the provision of markers or checksums to control the use of keys (see for example WO99/14887); and the provision of a reliable database of encryption keys should an authorised party need to refer back to this. This has resulted in the replacement of an encryption key becoming an increasingly expensive affair.

It is therefore desirable to maximise the reliability with which key management systems determine that an encryption key has not actually been compromised in order that keys are only discarded when absolutely necessary. This extends the average length of time for which keys can be used and reduces costs for the system administrator.

According to a first aspect of the present invention there is therefore provided a mobile radio unit for operation in a mobile radio communication system, which system incorporates an encryption key management controller for controlling the use of encryption keys by mobile radio units of the system for the encryption or decryption of radio transmissions, the mobile radio unit comprising: means for a user or the mobile radio unit to initiate deletion of an encryption key; and being characterised by comprising means for attempting to send an encryption key deletion report to the key management controller in response to such a deletion initiation event.

Also, according to a second aspect of the present invention there is provided a method of operating a mobile radio unit in a mobile radio communication system, which system incorporates an encryption key management controller for controlling the use of encryption keys by mobile radio units of the system for the encryption or decryption of radio transmissions, the method comprising: a user or the mobile radio unit initiating deletion of an encryption key; and being characterised by comprising the mobile radio unit attempting to send an encryption key deletion report to the key management controller in response to such a deletion initiation event.

Thus, in the present invention, if a user or the mobile radio unit has cause to initiate deletion of an encryption key, the mobile radio unit attempts to report the attempted deletion of the encryption key to the key management controller. The report can give the key management controller information as to whether or not the encryption key is likely to be or has been compromised.

When such a report is received by the key management controller, the controller is able to decide on the basis of the report whether it is necessary to replace or discard an encryption key. For example, if a report is received from a mobile unit, indicating that it has been tampered with and so is attempting to delete an encryption key it stores, and nothing further is heard from the mobile unit, the key management controller may discard the key stored in that mobile unit as it can determine, for example, that the mobile unit has been tampered with and that the key may not have been successfully deleted and that the key has probably therefore been compromised. Alternatively, if the same report is received and, shortly thereafter, a report further indicates that the key held by the mobile unit has been successfully deleted, the key management controller may decide to keep using the key that was stored by that mobile unit as the key has probably not been compromised. Thus, the attempt to report deletion of the encryption key gives the key management controller basis for deciding when it is likely that a key has or has not been compromised and therefore to discard the key more reliably.

Thus, according to a third aspect of the present invention there is provided a mobile radio communication system comprising: one or more mobile radio units which operate in the system; and an encryption key management controller for controlling the use of encryption keys by the mobile radio unit(s) of the system for the encryption or decryption of radio transmissions, wherein the mobile radio unit(s) comprise: means for a user or the mobile radio unit to initiate deletion of an encryption key; and characterised in that the mobile radio unit(s) comprise means for the mobile radio unit to attempt to send an encryption key deletion report to the key management controller in response to such a deletion initiation event, and in that the key management controller comprises means for deciding whether or not to replace or discard an encryption key as the result of a determination based on the encryption key deletion report.

According to a fourth aspect of the present invention there is provided a method of operating a mobile radio communication system, which system comprises one or more mobile radio units which operate in the system and an encryption key management controller for controlling the use of encryption keys by the mobile radio unit(s) of the system for the encryption or decryption of radio transmissions, the method comprising: a user or a mobile radio unit initiating deletion of an encryption key; and being characterised by comprising the mobile radio unit attempting to send an encryption key deletion report to the key management controller in response to such a deletion initiation event; and the key management controller deciding whether or not to discard or replace an encryption key as the result of a determination based on the encryption key deletion report.

The encryption key deletion report may contain a variety of information regarding the possible deletion of an encryption key by the mobile radio unit. For example, the report may indicate that key deletion has been initiated, successfully completed and/or that deletion could not be completed.

In one particularly preferred embodiment, the report may comprise a delete attempt indication, reporting that the mobile unit is going to attempt to delete the encryption key (the deletion of which has been initiated). Such a report can advantageously be sent straightaway, before any unauthorised third party is able to deactivate or interfere with the mobile unit and prevent the report being sent. On receipt of a delete attempt indication, the key management controller can register that the mobile unit is going to try to delete the encryption key and that the key might be compromised. The key management controller can then use this information to decide whether or not it is necessary to replace or discard the key to maintain system security.

In another embodiment, the report may comprise solely a delete successful indication, reporting that the encryption key has been successfully deleted. Such a report can be sent when the mobile unit has successfully deleted the encryption key and therefore gives the key management controller assurance that the key has actually been deleted. Thus, if the key management controller receives a delete successful indication, it can be confident that the encryption key has been deleted and was unlikely to have been compromised. The key management controller can likewise use this information to decide whether or not it is necessary to replace or discard the key to maintain system security. In this case, for example, it might be decided not to discard the key, which can, for example, be re-used, or continued to be used by the system. Average key lifetime is therefore improved and cost to the system administrator reduced.

In a particularly preferred embodiment, the report may comprise both a delete attempt indication (i.e. a report that the mobile station is going to attempt to delete the encryption key) and a successful delete indication (i.e. report that the encryption key has been successfully deleted). For example, when key deletion is initiated, the mobile unit may attempt to send immediately a delete attempt indication to the key management controller. Subsequently, for example after verification that the encryption key has been deleted, the mobile unit may attempt to send a delete successful indication. When either or both of these indications are received by the key management controller, it can use the information to decide whether or not to discard the encryption key.

For example, if the key management controller receives the delete attempt indication, and nothing further, it knows that the encryption key is quite likely to have been compromised, as the mobile unit has started the process of deleting the encryption key, but may well have been unable to complete the deletion attempt for some reason, such as successful interference with the mobile unit, and has not been able to send a delete successful indication. If both the delete attempt indication and the delete successful indication are received, or indeed if only the successful delete indication is received, the key management controller can be more confident that the encryption key was successfully deleted, as the mobile unit must have started the key deletion process and deleted the key before sending the delete successful indication.

To further improve reliability of determination of whether or not the encryption key is likely to have been compromised, it is preferable that the mobile unit verifies that the deletion has been successful before reporting successful deletion to the key management controller. Whilst the encryption key may be deleted in a variety of ways, such as by simply clearing the memory in which it is stored, it is therefore preferred that the encryption key is overwritten with a known string of variables (in practice likely to be 000.. or 111..), as is conventional. The known string may then be read back from the memory in which the encryption key was stored after key deletion in order to verify that key deletion has been successful. Thus, the possibility of a key being reported as deleted when it has in fact become known to a third party is reduced.

However, it is of course possible that the verification may indicate that the encryption key has not been successfully deleted. In this situation, or where it is otherwise found that the encryption key cannot be deleted, the report may therefore additionally or alternatively comprise a delete unsuccessful indication, reporting that the key could not be successfully deleted. This may be sent, for example, when the string of variables with which the key should have been overwritten could not be read from the memory location in which the key was stored after attempted indication. In another example, the delete unsuccessful indication might be sent if key deletion is interrupted after it has been initiated. If the delete unsuccessful indication is received, the key management controller can be more confident that the encryption key has been compromised, as the mobile unit may still store the encryption key even though the mobile unit attempted to delete the key. The key management controller may therefore decide to discard the encryption key.

More broadly, it can therefore be appreciated that the key deletion report may selectively comprise one or more of plural delete indications, such as a delete attempt indication, delete successful indication or delete unsuccessful indication.

The attempt to report encryption key deletion may be sent in a variety of ways, such as over a dedicated communications link. However, it is usually sent to the key management controller via the communication system itself, for example via base stations or the like of the communications system infrastructure. Thus, in a particularly preferred embodiment of the invention, the mobile radio communication system further comprises a communication system infrastructure which incorporates the encryption key management controller and via which the mobile units of the system communicate; and the mobile radio unit (s) attempt to send the encryption key deletion report to the key management controller via the system infrastructure.

One such system in which it is known to send certain communications regarding encryption keys to a key management controller via a communications system, although not the reports of the present invention, is known as an "Over The Air Re-keying" (OTAR) system. In an OTAR system, communication between mobile radio units is encrypted using Traffic Encryption Keys (TEKs). The TEKs are changed from time to time by a key management controller by transmissions sent to the mobile radio units via the communication system infrastructure, with communication of the TEKs being encrypted using Key Encryption Keys (KEKs) previously stored in the mobile radio units of the system. The mobile radio units operating in the same network or call group generally use the same TEK and, when this TEK is changed, it is therefore desirable for all the mobile units in the network or call group to change to use the new TEK at the same time. TEKs may therefore be sent to mobile units and a separate signal broadcast by the key management controller at the desired time at which the TEK to be used for encryption is to be changed. A mobile unit may therefore store plural TEKs, in an encrypted or unencrypted form, for use in the communication system under instruction of the key management controller. (Encryption keys stored in an encrypted form can be decrypted for use.) The key management controller may also control deletion of TEKs from the memory of mobile units by separate signals or as part of the communication of new TEKs or above-mentioned broadcast signal.

The mobile radio units may acknowledge safe receipt of a TEK, or deletion of a TEK, by sending acknowledgement messages to the key management controller over the system infrastructure. (Such acknowledgement of a key management controller initiated key deletion should be contrasted with the present invention, in which it is user or mobile unit initiated deletion which is being reported to the key management controller.) Any such acknowledgments or other communications or broadcast regarding the TEKs, but not actually communicating a TEK, are usually encrypted using an OTAR Encryption Key (OEK) as it jeopardises security to use the KEKs too frequently and using the TEKs may lead to errors or confusion where the TEKs are themselves changed.

Thus, it is known for a key management controller to control periodic replacement of encryption keys stored in mobile radio units to maintain system security. However, when implemented in such a system, the present invention allows the key management controller to make further decisions regarding such replacement based on information (i.e. the encryption key deletion reports) regarding the deletion of encryption keys from mobile units of their own volition or after initiation by a user and hence the possible disclosure of encryption keys to unauthorised users. For example, if a mobile unit is tampered with but a deletion successful indication (i.e. an encryption key deletion report indicating that, for example, a TEK stored in the unit has been successfully deleted) is received from that unit, the key management controller may automatically continue to use that TEK in a normal manner as it can be confident that the TEK has not been compromised. In other words, the encryption key can continue to be used in the system for transmissions between other mobile units until the normal replacement time for that TEK.

In contrast, in previous arrangements, the key management controller would have had no knowledge of the tampering or the possible key deletion. Furthermore, when the tamper was reported, the key management controller would have had to have discarded the TEK without further use as it would not know whether or not the TEK had been successfully deleted without being compromised.

Alternatively, where a delete attempt indication is received by the key management controller from a mobile radio unit following initiation of key deletion due to the mobile unit being tampered with, but no further report is received, the key management controller may discard the TEK or TEKs stored in the mobile unit straightaway. This may involve the key management controller of the OTAR system instructing other mobile units to delete the TEK(s). The key management controller may also make provision for the TEK(s) not to be re-used.

As well as OTAR systems, many other mobile radio communication systems use plural types of encryption key, such as the TEKs, KEKs and OEKs described above, for different types of communication. In particular, a communication system may use a communication encryption key to encrypt normal communications between mobile units, e.g. voice or data signals, such as the TEK of an OTAR system. Likewise, a key management key may be used to encrypt communication of encryption keys from a key management controller to mobile units, such as the KEK of an OTAR system. Also, a general encryption key may be used to encrypt general command or control communications between a key management controller and the mobile units, such as the OEK of an OTAR system. It may be desirable for only one or other, or a selection of the communication encryption key, key management key and general encryption key to be deleted from a mobile unit of its own volition or at the request of a user, dependent on the circumstances of the deletion. Thus, in a preferred embodiment, the mobile radio unit or user is able to optionally initiate deletion of one of more encryption keys from the mobile radio unit.

In a particularly preferred embodiment, the initiation of key deletion may comprise initiation of deletion of a first encryption key, or a first type of encryption key. This may, for example, be the communication encryption key currently being used to encrypt (standard) communications over the radio communication system, such as a TEK in an OTAR system. Alternatively it may be all the communication encryption keys, e.g. TEKs, held in the mobile unit. This might be appropriate, for example, where a user wishes to hand over the mobile radio unit to a third party for repair or the like and is not particularly concerned that the unit will be tampered with, but merely wishes to deactivate the unit temporarily. In an OTAR system the unit could then later be reactivated via the communication system by receiving new TEKs from the key management controller (decrypted by the KEK still held in the mobile unit).

In an alternative embodiment, all encryption keys stored by the mobile radio unit may be deleted. This might be appropriate, for example, where a user is concerned that the mobile radio unit is about to be taken from him against his will, or the mobile radio unit detects that it is being tampered with. For example, in an OTAR system it may be desirable to delete all the TEKs, the KEK and the OEK such that the mobile radio unit can no longer be used in the mobile communication system, at least until a new KEK and OEK are provided.

The Applicants have also appreciated that it may be desirable to delete the encryption key(s) with varying degrees of urgency. The mobile unit(s) may therefore further comprise means for initiating key deletion at one of a plurality of priority levels. For example, where a user wishes to lend the mobile unit to another (unauthorised) user or hand the unit over for repair, the user may prefer to initiate key deletion with low urgency or priority level. Such key deletion may be referred to as a user initiated non-emergency' key deletion. In contrast, where a user is concerned that he is about to lose control of a mobile unit against his will, or a mobile unit detects tampering by an unauthorised user, key deletion may be initiated with high urgency or priority level. Such key deletion may be referred to as "user initiated emergency" key deletion, or "mobile unit initiated emergency" key deletion, as appropriate.

In low priority key deletion the mobile unit may, for example, require confirmation from the key management controller that it can proceed to delete the encryption key(s) before proceeding to delete the encryption key(s). Thus, the mobile unit may first send an encryption key deletion report comprising an encryption key deletion request. On receipt of the request, the key management controller may send an acknowledgement or deletion proceed message to the mobile unit. The key management controller might send the acknowledgement only when it has registered that the mobile unit is going to delete the encryption key(s) mentioned in the request. If the mobile unit does not receive the acknowledgement it may not proceed to delete the encryption key (s). If the mobile unit does receive the acknowledgement, it may proceed to delete the encryption key(s) and send a deletion successful indication or deletion unsuccessful indication to the key management controller, as appropriate. This can allow the key management controller to retain control of the deletion of the encryption key(s) from the mobile unit, although this deletion is initiated by the user or mobile unit.

When low priority key deletion concerns two or more encryption keys or types of encryption key, it may proceed in two or more stages. For example, the mobile unit may first delete a first encryption key or type of encryption key and send an appropriate key deletion report, e.g. deletion successful indication, to the key management controller. The mobile unit may then later delete a second encryption key or type of encryption key (for example after receipt of an acknowledgement of the first key deletion report from the key management controller) and send an appropriate key deletion report, e.g. deletion successful indication, to the key management controller. The first encryption key or type of encryption key may be the communication encryption keys stored in the mobile radio unit (e.g. TEKs of an OTAR system), and the second set of keys may by the key management and/or general encryption keys stored in the mobile radio unit (e.g. KEK and/or OEK of an OTAR system). The user may therefore have an opportunity to reconsider deletion of some of the keys (e.g. the KEK and OEK) during the deletion process, e.g. between the two deletion steps.

In contrast, high priority deletion may proceed independently. For example, the mobile unit may delete all the required encryption keys and then send an appropriate key deletion report to the key management controller. Thus, the encryption keys are deleted without delay, reducing the chance that they may be compromised.

Regardless of whether the deletion is high or low priority, and whether the report concerns a deletion request, delete attempt indication, delete successful indication etc., in order that the mobile unit knows whether or not the deletion report it has sent has been received by the key management controller, it is preferable that, on receipt of a key deletion report, the key management controller sends an acknowledgement message to the mobile unit that sent the report. This can confirm that the deletion report has been received. The key management controller may therefore further comprise means for sending an acknowledgement to a mobile unit in response to a deletion report received from the mobile unit.

Thus, where a user has initiated key deletion, for example because the user wishes to hand the mobile unit over to an unauthorised third party, after receiving the acknowledgement, the mobile unit can indicate to the user that the deletion report has been received by the key management controller. The user is then able to hand over the mobile unit knowing that the deletion of the encryption keys from the unit has been reported (and that the keys will not need to be discarded by the key management controller). The mobile radio unit may therefore further comprise means for indicating to a user that the deletion report has been received by the key management controller in response to an acknowledgement received from the key management controller.

Similarly, where a low priority key deletion has two or more steps, the mobile unit may wait for an acknowledgement of a key deletion report before progressing to the next key deletion. For example, in an OTAR system, a mobile unit may first delete the TEKs held in its memory and send a key deletion report. The mobile unit may then await acknowledgement of the key deletion report from the key management controller before proceeding to delete the KEK and OEK. Thus, in a preferred embodiment, the mobile unit is able to seek confirmation from the user before continuing to delete the other encryption keys and, in this preferred embodiment, the mobile unit may therefore further comprise means for seeking confirmation from a user before deleting an encryption key.

In order for the system to operate most reliably it is desirable that any deletion report that is attempted to be sent by a mobile unit is received by the key management controller. It is therefore a preferred feature of the present invention for the mobile radio unit to repeatedly attempt to send the deletion report until an acknowledgement is received from the key management controller. This repeated sending of the deletion report makes it more likely that the report will be received by the key management controller.

However, it may be undesirable for the mobile unit to keep sending the deletion report to the key management controller indefinitely and the mobile unit may therefore further comprise a limiting means which limits the number of times or time period for which the mobile unit attempts to send the deletion report whilst awaiting an acknowledgement. For example, the limiting means may be a counter which counts the number of attempts to send the report and after a predetermined number of attempts to send the report without an acknowledgement being received, stops the mobile unit sending the report. Alternatively, the limiting means may stop the mobile unit sending the report after a predetermined time.

Where a low priority key deletion has two or more steps, if the mobile unit does not receive an acknowledgement, it may proceed to delete any further keys regardless and attempt to send a further deletion report after key deletion. Alternatively, the mobile unit may seek confirmation from a user as to whether or not to proceed with the key deletions indicating that an acknowledgement has not been received.

One problem with the above-mentioned system is that it may be required to delete an encryption key that the mobile unit uses for encryption of communication to the key management controller, i.e. the general encryption key referred to above, before sending a deletion report that would be encrypted by that key. In particular, in an OTAR system, it may be required to delete the OEK before sending an encryption key deletion report that, for example, either the OEK and KEK, or all the encryption keys of the mobile unit, have been deleted. It may therefore be difficult for the mobile unit to send the report in an encrypted form to the key management centre as it no longer has an encryption key with which to communicate with the key management controller.

In some systems, the report may therefore be sent in an unencrypted form. This is a straightforward way of sending a report and may be sufficiently secure where the report does not contain any information which it is desired to keep secure or there is a standard air interface encryption system (i.e. general transmission encryption regardless of the particular mobile radio unit, base station or call group being used) in place in the system.

However, where the report may contain information it is desired to keep secure, such as an identification code or serial number for the mobile radio unit or the encryption key(s) being deleted, it may not be sufficiently secure to send an unencrypted key deletion report. Thus, in a preferred embodiment, the mobile radio unit encrypts the key deletion report using the encryption key to be deleted, before deleting the encryption key. This has the advantage that the report may be sent, for example after successful deletion has been verified for a deletion successful indication, in an encrypted form even when the encryption key has been deleted from the memory of the mobile radio unit.

Thus, the mobile radio unit is able to delete the encryption key and to communicate with the key management controller before sending a report that the encryption key has been deleted. Communication therefore remains secure and the key management controller receiving the key deletion report can be confident that the key has been deleted.

The mobile radio unit may need to encrypt more than one report, reflecting the possible future reports it may need to send. For example, the mobile radio unit may find it is unable or only partially able to delete the key and need to send a deletion unsuccessful indication rather than a deletion successful indication. Thus, in a further preferred embodiment the mobile radio unit encrypts plural possible deletion reports using the encryption key to be deleted, before deleting the encryption key. Thus, the mobile radio unit may prepare, for example, a deletion successful indication and a deletion unsuccessful indication before deleting the encryption key. It can then verify whether or not the deletion attempt has been successful and send the appropriate report after attempted key deletion.

In many mobile radio communication systems, a real time clock is used as part of the encryption of radio transmissions in order to achieve synchronisation between transmitter and receiver for example. In particular, a real time clock might be used to select an Initialisation Vector (IV) with which to encrypt a message. In such systems it may be difficult for the mobile radio unit to pre-encrypt messages to be sent later, for example on verification of successful or unsuccessful encryption key deletion, as the mobile radio unit may be unable to determine which IV, for example, should be used, as it must encrypt the result without knowing at what time the pre-encrypted message will actually be sent.

In a preferred embodiment, in such circumstances, the mobile unit therefore pre-encrypts a plurality of deletion reports suitable for sending at different times. For example the deletion reports may contain different IVs or time stamps. The mobile radio unit can then later select which of the pre-encrypted messages to send, according to the current time at which it wishes to send the deletion report.

As only slowly progressing real time clocks are often used for encryption synchronisation, perhaps only moving on or "ticking" every two or three minutes, it may only be necessary to pre-encrypt a small number of deletion report messages. In this case, this preferred embodiment has the advantage that, with only a few pre-encrypted messages being necessary, a deletion report can be sent with the usual mode of encryption synchronisation and not requiring any special encryption synchronisation considerations at the key management controller.

However, if the power were to fail during the key deletion process, the above embodiments are likely to lead to a failed key deletion report. This is because it may be a long time before power is restored (for example the mobile radio unit is switched on again or has a new battery inserted), and there will be no pre-encrypted message for the time after power is restored. In some mobile radio units an additional power source may therefore be provided. For example, tamper protection circuitry may be powered by an independent power supply. Similarly, the mobile radio unit may be provided with means for ignoring power supply off commands during a key deletion procedure. This may reduce the likelihood of a pre-encrypted key deletion report not being available for the time of sending the report. However, in a particularly preferred embodiment, the mobile radio unit has memory means for storing the current point in the key deletion procedure. The memory means is preferably a conventional non-volatile memory. Whenever the power supply is switched on or restored to the mobile unit, it checks this memory. If it discovers that it was part way through a key deletion procedure (from the contents of the memory) it immediately resumes the key deletion procedure. In this embodiment, although the chance of the key deletion procedure being completed is improved it is still possible that a suitable pre-encrypted key deletion report will not be available.

In another embodiment, the mobile station is therefore provided with means for deciding whether to send the deletion report unencrypted, not at all if there has been a power interruption, or with a special "emergency" time value. In the latter case, the mobile radio unit would have previously encrypted the deletion report using the emergency time value.

A further problem is that, where the key management controller sends an acknowledgement to the mobile unit on receipt of a key deletion report, and the mobile unit has already deleted the encryption key with which the acknowledgement is encrypted, the mobile unit may be unable to decrypt the acknowledgement. One such example of this is where a mobile unit has reported deletion of the OEK, used to encrypt acknowledgements sent by the key management controller, of an OTAR system.

In a preferred embodiment, the acknowledgement may therefore be sent unencrypted when the encryption key used for decrypting communication from the key management controller has been deleted. Thus, the key deletion report may indicate whether or not the acknowledgement by the key management controller should be encrypted or not. For example, a flag may be set in the deletion report indicating that an unencrypted acknowledgement is required. In other words, the flag might be set when the deletion report relates to deletion of the key used to decrypt acknowledgements. Alternatively, the key management controller may determine whether or not the deletion report is reporting deletion of the key it uses to encrypt acknowledgements and, if so, send the acknowledgement unencrypted.

However, similarly to the encryption key deletion report, the acknowledgement may contain information it is desired to keep secure, such as an identification code or serial number for the encryption key(s) whose deletion has been reported. It may therefore be undesirable to send the acknowledgement unencrypted. It may therefore be desirable for the mobile unit to pre-encrypt the acknowledgement it expects to receive from the key management controller. Then, on receipt of the acknowledgement, the received message can be compared to the pre-encrypted expected acknowledgement for verification. The mobile unit is therefore able to receive the acknowledgement after the encryption key it uses to decrypt acknowledgements has been deleted.

However, as discussed above, encryption is often dependent on the time that messages are sent and received. Thus, it may be difficult for the mobile unit to correctly pre-encrypt the expected acknowledgement as it does not know at what time the key management controller will send the acknowledgement. In particular, where an Initialisation Vector is used for encryption purposes, the mobile unit may not know what Initialisation vector the key management controller will use (as the Initialisation Vector may be selected according to the time the message is sent). In other arrangements, the Initialisation Vector may be chosen at random by the sender of the message and so again, the recipient may not be able to predict the expected acknowledgement. In a preferred embodiment therefore, a special, predetermined Initialisation Vector is used for acknowledgements from the key management controller. The mobile unit is therefore able to pre-encrypt the expected acknowledgement using the special Initialisation Vector and, as the special Initialisation Vector is not, for example, dependent on the time the acknowledgement is sent by the key management controller or a random selection, the acknowledgement sent by the key management controller will be the same as the pre-encrypted acknowledgement and can be successfully verified by the mobile unit.

In another preferred embodiment, the key management controller encrypts the acknowledgement using the Initialisation Vector of the deletion report it is acknowledging. The mobile unit can pre-encrypt the expected acknowledgement using the Initialisation Vector of the key deletion report before deleting the encryption key and sending the report. As above, receipt of the acknowledgement can be verified by comparing the encrypted received acknowledgement with the pre-encrypted expected acknowledgement, thus avoiding the need to decrypt the received acknowledgement. The encrypted received and pre-encrypted acknowledgements will be the same as the same Initialisation Vector was used for encryption of each acknowledgement.

This arrangement also ties the acknowledgement to the report, and would help to avoid any ambiguity about which report is being acknowledged.

In another preferred embodiment, the acknowledgement is encrypted using an initialisation vector that is derived in a predetermined manner from the initialisation vector used to send the report. This has the added security that the replying unit does not use exactly the same initialisation vector for its reply.

Thus, where the initialisation vector to be used varies with time, the acknowledgement would be encrypted using the initialisation vector of the message being acknowledged or using an initialisation vector that is derived in a predetermined manner from the initialisation vector of the message being acknowledged regardless of the time that the acknowledgement is sent. This idea is equally applicable where the initialisation vector varies randomly, or varies in some other way.

Where a time value is included in the deletion report, whether it is used for encryption synchronisation or not, the Applicants have realised that the time between preparation of the key deletion report for sending and its receipt at the key management controller may be used by the key management controller to further determine the confidence with which it can decide whether or not a key has been compromised.

For example, if there is a large difference between the time stamp of the deletion report and the time that the deletion report is received by the key management controller, the key management controller may consider it likely that the key was in fact compromised. Alternatively, where there is only a small difference between the time stamp of the deletion reports and the time the deletion report is received at the key management controller, the key management controller may consider it very likely that the key was successfully deleted without any power interruption or failure, and without any possibility that the encryption key was compromised.

Thus, in a preferred embodiment of the present invention, the encryption key deletion reports contain an indication of the time at which the respective mobile unit deleted the key and the key management controller determines or has means for determining whether or not to discard the deleted encryption key on the basis of the difference between the time indication in the report and the time the report is received by the key management controller.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on a computer. The invention also extends to a computer software carrier comprising such software which when used to operate a radio system comprising a digital computer causes in conjunction with said computer said system to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the methods of the invention need be carried out by computer software.

Preferred embodiments of the present invention will now be described, by way of example, with reference to the accompanying drawings, in which:
Figure 1 illustrates a radio communication system of the present invention;
Figure 2 illustrates a method of executing a user-initiated non-emergency key deletion of the present invention;
Figure 3 is an illustration of a delete report message sent from a mobile unit to a key management controller of the present invention;
Figure 4 is an illustration of a delete proceed message sent from a key management controller to a mobile unit of the present invention;
Figure 5 is an illustration of a delete advice message sent from a mobile unit to a key management controller of the present invention;
Figure 6 is an illustration of an acknowledgement message sent from a key management controller to a mobile unit of the present invention; and
Figure 7 is an illustration of a delete failure message sent from a mobile unit to a key management controller of the present invention.

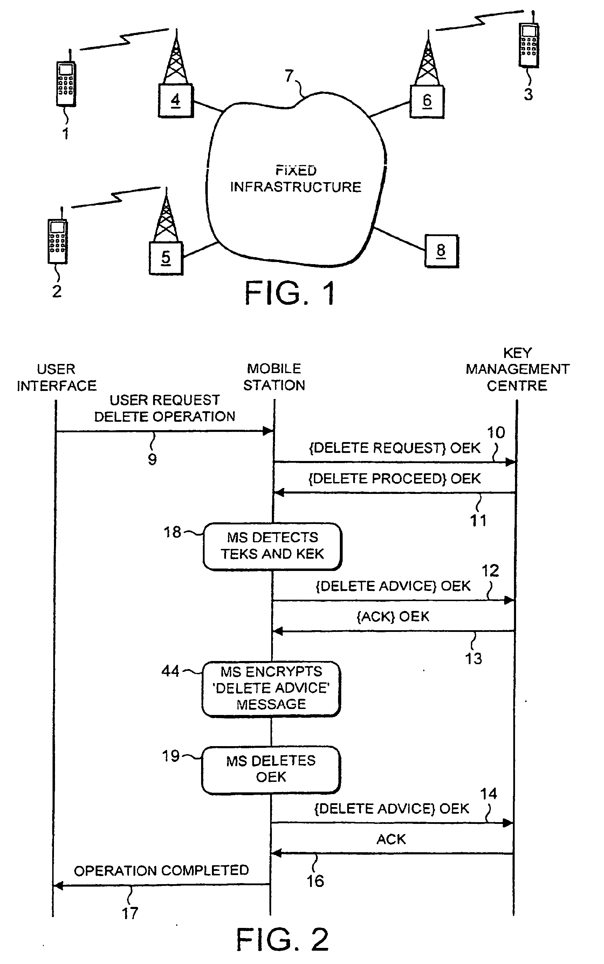

Referring to Figure 1, a mobile radio communication system comprises a plurality of mobile radio units 1, 2, 3 which communicate via a plurality of base stations 4, 5, 6 and a fixed infrastructure 7. Incorporated in the fixed infrastructure 7 is a key management controller 8 for managing encryption keys used for encrypting communications in the mobile radio communication system.

In this example, the key management controller 8 uses a system known as "Over The Air Re-keying" (OTAR) to send encryption keys for encrypting normal voice or data communication between mobile radio units 1, 2, 3 or between the system infrastructure and mobile radio units 1, 2, 3 (for example, where a dispatcher or controller, or a call from outside the system such as over a PSTN connection, is desired to be connected to mobile units 1, 2, 3 via the system infrastructure) to mobile radio units 1, 2, 3, via the infrastructure 7 and base stations 4, 5, 6. In an OTAR system, such encryption keys are known as Traffic Encryption Keys (TEKs). In other examples, such keys may be distributed by the key management controller 8 over a separate dedicated link or over the communication system infrastructure 7 by a system other than OTAR. However, the present invention will be exemplified in the context of an OTAR system.

In an OTAR system, communication of the TEKs from the key management controller 8 to the mobile radio units 1, 2, 3, via the system infrastructure 7 and base stations 4, 5, 6, is encrypted using Key Encryption Keys (KEKs). An appropriate KEK is previously stored in each of the mobile units 1, 2, 3 and can be used to decrypt the TEKs for use after receipt by a mobile unit 1, 2, 3. In some embodiments, TEKs are decrypted for use and stored in the memory of the mobile radio units 1,2,3. In other embodiments, the TEKs are stored in the memory of the mobile radio units 1,2,3 in their encrypted form and decrypted using the appropriate KEK for use as required.

The key management controller 8 maintains a database of TEKs for use in the system. The database also contains a list of which TEKs are currently stored by, and in use by, each mobile unit 1, 2, 3. TEKs are allocated from the database and sent to the mobile unit 1, 2, 3 or a group of mobile units 1, 2, 3 for use for communication in over the system. For example, all mobile units 1, 2, 3 in a particular private network, call group or the like might be provided with the same TEK, and mobile units 1, 2, 3 in other networks provided with other TEKs such that only mobile units authorised to operate in a particular network are able to communicate with other mobile units 1, 2, 3 in that network.

To further improve system security, the TEKs are changed periodically by the key management controller 8. In this example, new TEKs are sent periodically by the key management controller to the respective mobile units 1, 2, 3. Each mobile unit 1, 2, 3 then replaces the TEK it is using for communication over the network with the new TEK. In some examples, as is conventional, the key management unit 8 may send new TEKs in advance of a time at which the respective mobile units 1, 2, 3 are to change to using the new TEK. A single message may then be broadcast by the key management controller 8 to the respective mobile units 1, 2, 3 at the time the key management controller wishes the mobile units 1, 2, 3 to change to using the new TEK. This ensures that all mobile units 1, 2, 3 have the new TEK and are able to change to using the new TEK at the same time. Mobile units 1, 2, 3 may therefore store TEKs which are replaced and/or the new TEK before it is used, and use these TEKs to decrypt communications from mobile units 1, 2, 3 which are still using an old TEK (for example because they have missed the broadcast message) or have started using a new TEK (for example where the mobile unit 1, 2, 3 in question has missed the broadcast message). Any mobile unit which realises that it is still using an old key should ask the key management controller for a key update.

In order to ensure the accuracy of the database of TEKs stored by each mobile unit 1, 2, 3, the key management controller usually controls deletion of the TEKs from the memory of the mobile units 1, 2, 3 in which they are stored. In this case, the key management controller 8 sends key deletion messages to the mobile units 1, 2, 3 instructing deletion of TEKs from the memory of the mobile units 1, 2, 3. These messages may be sent with the new TEKs or separately. On receipt of an appropriate message, the mobile unit 1, 2, 3 deletes the appropriate TEK and sends an acknowledgement message to the key management controller 8. On receipt of the acknowledgement message the key management controller 8 can update its database to reflect that the TEK is no longer held in that mobile unit 1, 2, 3. Such messages are sent, as is conventional in an OTAR system, using encryption reserved for a messages concerning TEKs or other control messages such as instruction messages and acknowledgments that do not actually communicate a TEK. In an OTAR system this encryption uses an OTAR Encryption Key (OEK) to further encrypt the message and key after it has first been encrypted with the KEK, so that the message and transmitted key is in effect doubly encrypted (or triple encrypted where air-interface encryption is being used). The OEK is previously stored in each mobile radio unit for use for such communications, but may occasionally be changed, by the key management controller 8 over the system infrastructure 7 in a manner similar to that for TEKs, to improve system security. Any such change is noted in the database of the key management controller 8. The operation of an OTAR system is described in further detail in ETSI TETRA ETS 300-392 part 7 TETRA V & D Security.

TEKs, along with the KEKs and OEKs are, however, sometimes independently deleted by the mobile radio units without instruction from the key management controller. For example, the mobile radio units 1, 2, 3 usually have tamper protection circuitry for detecting attempts to interfere with their internal circuitry and memory, particularly the memory in which encryption keys are stored. Such tamper protection circuitry is often arranged to initiate deletion of stored encryption keys on detection of any unauthorised interference. Similarly, mobile radio units 1, 2, 3 often include a user interface, such as a keypad or the like, for receiving a user request to delete encryption keys. A user may, for example, operate an appropriate button or buttons on such a keypad to instruct the mobile unit 1, 2, 3 to delete one or more encryption keys stored in the mobile unit 1, 2, 3 in order that it can be handed over to a third party who is not authorised to communicate over the respective communication network in a disabled state, i.e. without the appropriate encryption keys (e.g. TEKs, KEK or OEK). This enables a user to lend a mobile unit 1, 2, 3 to an unauthorised user or hand it over for repair for example. In another example, the user interface further provides for emergency key deletion, for example by the keypad having a dedicated emergency key deletion button or the like, for initiating emergency key deletion when the user of the mobile unit is concerned that the mobile unit 1, 2, 3 is about to be removed from his control against his will.

The present invention provides for the key management controller 8 to be informed of such independent encryption key deletion by the mobile units 1, 2, 3.

In the example illustrated in Figure 2, using the user interface, a user requests, at step 9, deletion of the TEKs, a KEK and OEK stored in a mobile radio unit 1, 2, 3. In this example, the request is made in a non-emergency situation, such as for handing over of the mobile radio unit 1, 2, 3 for repair, and is referred to as a 'user initiated non-emergency' key deletion request.

The mobile radio unit registers the request and sends a delete attempt indication or delete report 10 to the key management controller 8 via one of the base stations 4, 5, 6 and the system infrastructure 7. The delete report 10 is encrypted using the OEK stored by the mobile unit 1, 2, 3.

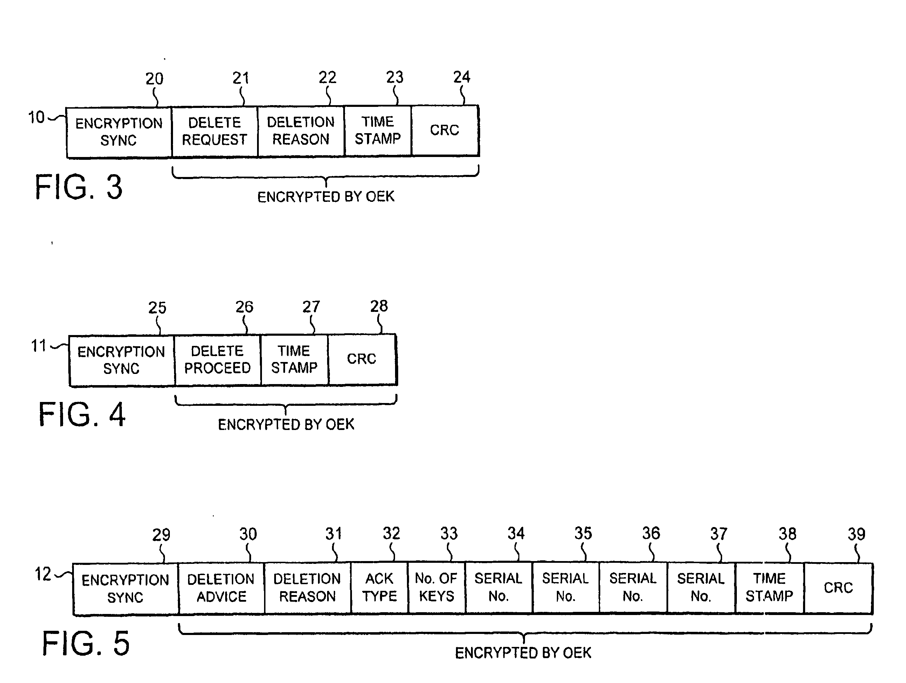

In the example shown in Figure 3, the delete report 10 comprises encryption synchronisation 20, a delete request 21 indicating, in this example, that the mobile unit is going to attempt to delete the TEKs and KEK, a deletion reason 22 indicating, in this example, that the report is a 'user initiated non-emergency' key deletion report (or, in other examples, another reason that the mobile unit is attempting to delete the encryption keys as described below), a time stamp 23 and a correct receipt checksum (CRC) 24.

The encryption synchronisation 20 includes, in this example, a randomly chosen initialisation vector (IV) which is used to encrypt the report 10 and likewise used by the key management controller 8 on receipt of the report 10 to decrypt the report 10. The encryption synchronisation 20 may further contain an algorithm identifier, pointer or serial number identifying the OEK used to encrypt the report 10. Thus, particularly where the OEK changes from time to time, the key management controller can use the encryption synchronisation to identify the correct OEK for decrypting the report.

It may be desirable to indicate in this message (and any of the other OTAR messages) whether or not the message is being encrypted. This could be achieved by, for example, including an "encryption flag" in the unencrypted portion of the message, such as along with the encryption synchronisation field 20. An encryption synchronisation value of '0' could, for example, be used to indicate that the rest of the message is unencrypted. Alternatively, if the encryption flag is the first bit in the message, if encryption is on, the initialisation vector could follow, but if encryption is off, no initialisation vector follows (e.g. it is set to '0').

The time stamp 23 indicates the time at which the report 10 was created or first sent by the mobile radio unit 1, 2, 3. In one example, this is used for encryption synchronisation purposes, where the encryption varies with time, dependent on a real time clock for example. In other examples, the time stamp 23 is used by the key management controller 8 as part of a determination as to the likelihood that the encryption keys have been compromised, as described further below.

The CRC 24 of the report 10 enables the key management controller 8 to check whether or not it has properly received the report 10. The CRC comprises a value added to the report 10 by the mobile unit 1, 2, 3 sending the report 10 and arrived at by the mobile unit 1, 2, 3 performing a checksum operation on the report 10 before sending the report 10. On receipt, the key management controller 8 performs the same checksum operation on the report 10 and compares the value it obtains with the CRC in the report 10. If these are the same, the key management controller can determine that the report 10 has been properly and completely received. They are not the same, the key management controller 8 knows that the report 10 has not been properly received and can discard the report 10. Likewise, the key management controller 8 can construct a CRC 28, 43 for messages it sends to the mobile unit 1, 2, 3 (see below).

On receipt of the delete report 10, the key management controller 8 sends an acknowledgement or delete proceed message 11 to the mobile station 1, 2, 3 that sent the report 10. In the example shown in Figure 4, the delete proceed message 11 comprises encryption synchronisation 25, a delete proceed 26 indicating that the mobile unit 1, 2, 3 should proceed with the deletion of the TEKs and KEK, a time stamp 27 and a CRC 28. The receipt of this delete proceed message 11 from the key management controller 8 thus confirms to the mobile radio unit 1, 2, 3 that the key management controller 8 has been informed that it is going to attempt to delete the TEKs and KEKs.

If the mobile unit 1, 2, 3 does not receive the acknowledgement or delete proceed message 11 within a predetermined time, it resends the delete report message 10. The mobile unit 1, 2, 3 continues to resend the delete report message 10, in this example each time the predetermined time period elapses, until the delete proceed message 11 is received or the delete report message 10 has been sent a predetermined maximum number of times. (In this example, a counter counts the number of times the report is sent, although in another example the report can be sent repeatedly until a predetermined maximum time period elapses.)

When the mobile unit 1, 2, 3 does not receive a delete proceed message, in a user initiated non-emergency key deletion, the mobile unit 1, 2, 3 informs the user that it has been unable to contact the key management controller 8. The user may then decide, for example, whether or not to hand the mobile unit over to the unauthorised third party, to repeat the procedure later or to proceed with an emergency key deletion procedure as described below. In another example, the mobile unit 1, 2, 3 may simply proceed with a emergency key deletion as described below.

On receipt of the delete proceed message 11, the mobile unit 1, 2, 3 proceeds, at step 18, to delete the TEKs and KEK. In this example, TEKs are deleted first, followed by the KEK. Thus, if the user changes his mind and the deletion process is stopped, the KEK is less likely to have been deleted when the user terminates the key deletion procedure and the user can obtain further TEKs over the communication system using the KEK without the inconvenience of obtaining a further KEK (which is not usually obtainable over the communication system). In another example, for the same reason, the mobile unit 1, 2, 3 first only informs the key management controller 8 in the delete report 10 of attempted deletion of the TEKs, and on receipt of an acknowledgement or delete proceed message 11 only deletes the TEKs. A further delete report message 10 is then sent in regard to the KEK, and a further delete proceed message 11 received, before the KEK is deleted. The user may be informed, or requested to confirm his desire to proceed, between deletion of the TEKs and the KEK.

The TEKs and KEK are deleted by the mobile radio unit 1, 2, 3 overwriting the memory in which the keys are stored with a known string of variables (in practice likely to be 000.. or 111..), as is conventional, although a variety of other methods may be used. Either or both TEKs stored in an encrypted or unencrypted form are deleted. The mobile unit 1, 2, 3 then verifies that the key deletion has been successful. In this example, the known string of variables with which the TEKs and KEK were overwritten is read back from the memory in which the encryption keys were stored after key deletion in order to confirm that key deletion has been successful. The mobile unit 1, 2, 3 is therefore certain that the encryption keys have been properly deleted.

If the TEKs and KEK have been successfully deleted, the mobile unit 1, 2, 3 then sends a deletion successful indication, i.e. a delete advice message 12 as shown in Figure 5, advising the key management centre 8 that the key deletion has been successful. This message 12 is encrypted using the OEK. More specifically, referring to Figure 5, the delete advice message 12 comprises encryption synchronisation 29, deletion advice 30 indicating that the message 12 is advising of successful deletion of the encryption keys, deletion reason 31 repeating the reason that the keys are being deleted sent with the deletion report message 10 (deletion reason 22), an acknowledgement type 32 indicating the type of acknowledgement required from the key management controller 8, a number of keys 33 indicating the number of keys that have been successfully deleted (although this can equally be replaced by a length counter or end marker for the message 12), serial numbers 34 to 37 indicating the TEKs and KEK that have been deleted, time stamp 38 and CRC 39.

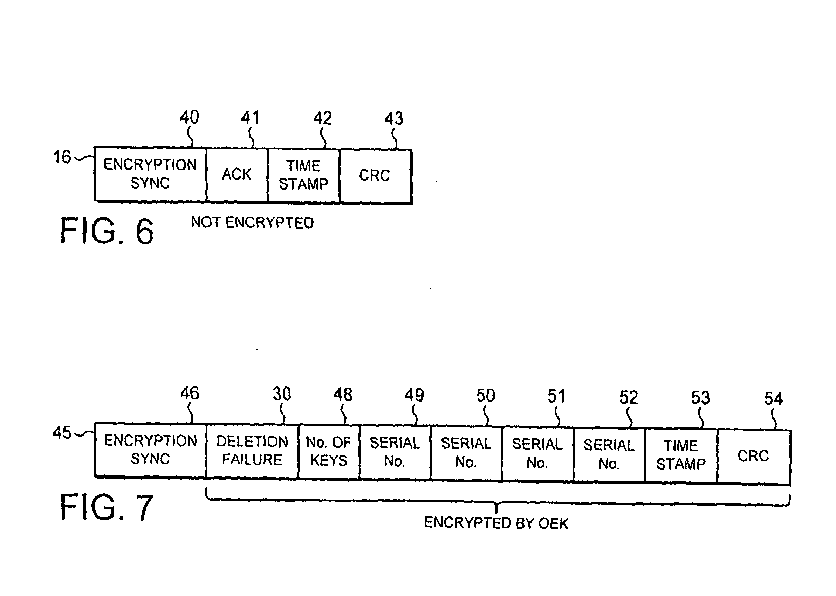

If the TEKs or KEK have not been successfully deleted, for example because the memory device in which one of the keys is stored is faulty, the mobile unit 1, 2, 3 sends a delete unsuccessful indication or delete failure message 45 as shown in Figure 7. The delete failure message 45 is encrypted using the OEK. It comprises encryption synchronisation 46, deletion failure 47 indicating that the message 45 is advising of unsuccessful deletion of the encryption keys, a number of keys 48 indicating the number of keys for which deletion has been unsuccessful, serial numbers 49 to 52 indicating the TEKs and KEK for which deletion has been unsuccessful, time stamp 53 and CRC 54.

On receipt of the delete advice message 12 from the mobile unit 1, 2, 3, indicating that key deletion has been successful, the key management controller 8 registers that the TEKs and KEK have been successfully deleted. The key management controller 8 also sends an acknowledgement message 13 to the mobile unit 1, 2, 3. When the mobile unit 1, 2, 3 receives this acknowledgement message, it knows that the key management controller 8 has received the deletion advice message 12 and can proceed to the next step in the key deletion procedure. However, if the mobile unit does not receive the acknowledgement message 13 it continues to send the deletion advice message 12. The deletion advice message 12 is repeatedly sent until the mobile unit 1, 2, 3 receives the acknowledgement message or the deletion advice message 12 has been sent a predetermined number of times without the acknowledgement message 13 being received. The acknowledgement message 13 is encrypted using the OEK. Such encryption is requested in the deletion advice message 12 by setting an appropriate flag in the acknowledgement type 32.

When the mobile unit 1, 2, 3 receives the acknowledgement message, it proceeds, at step 19, to delete the OEK. However, before doing this the mobile unit 1, 2, 3 pre-encrypts, at step 44, using the OEK, a delete advice message 14, having the same form as delete advice message 12 but having different values and parameters as appropriate to be sent after the OEK has been deleted. For example, the number of keys 33 is one and only the serial number 34 to 37 of the OEK is required.

In this example, encryption synchronisation 29 is dependent on the time at which the delete advice message 14 is actually sent. Thus, the mobile unit 1, 2, 3 actually pre-encrypts several delete advice messages 14 having different encryption synchronisation as it is not possible to predict at exactly what time the mobile unit 1, 2, 3 will want to send a delete message 14. Several delete advice messages 14 will therefore be prepared for sending. Thus, when the OEK has been deleted, the mobile unit 1, 2, 3 sends the delete advice message 1, 2, 3 having the appropriate encryption synchronisation 29 for the actual time of sending of the message 14.

The acknowledgement type 32 for the delete advice message 14 is set so as to prompt the key management controller 8 to send an acknowledgement message 16 unencrypted. This is because the OEK has been deleted and the mobile unit 1, 2, 3 would not be able to decrypt an acknowledgement message if it were encrypted using the OEK. The acknowledgement message 16 may nevertheless be protected by "air-interface" encryption of the communication system which is applied to all communications by the system between the base stations 4, 5, 6 and mobile units 1, 2, 3.

In another example, the acknowledgement type 32 for the delete advice message 14 is to indicate to the key management controller 8 that it should encrypt the acknowledgement message using the OEK and the IV used to encrypt the deletion advice message 14 being acknowledged. In this case mobile unit 1, 2, 3 pre-encrypts the acknowledgement message 16 it expects to receive in response to each pre-encrypted deletion advice message 14, at step 44, using the OEK before it is deleted. The acknowledgement message 16 is then sent by the key management controller in an encrypted form, using the IV of the deletion advice message 14, and can be recognised by the mobile radio unit 1, 2, 3 after the OEK has been deleted by the mobile unit 1, 2, 3 simply comparing the expected acknowledgement message with the received message 16.

Similarly to above, if the mobile unit 1, 2, 3 does not receive the acknowledgement 16, it may repeatedly send the deletion advice message until the mobile unit 1, 2, 3 receives the acknowledgement message 16 or the deletion advice message has been sent a predetermined number of times without the acknowledgement message 16 being received.

When the mobile unit 1, 2, 3 receives the acknowledgement 16, it indicates to the user, at step 17, that the key deletion procedure has been completed. The user may then hand the mobile unit 1, 2, 3 over to an unauthorised user as desired, knowing that the mobile unit contains no encryption keys and that the key management centre 9 has been informed of the keys' deletion. Thus, the deleted encryption key are effectively returned to the key management centre 8 before the mobile unit 1, 2, 3 is handed over.

However, as mentioned above, the mobile radio unit may be requested to delete the encryption keys in an emergency situation, such as where a user is about to lose control of the mobile unit 1, 2, 3 against his will or the non-emergency key deletion fails. In this case, a user may depress an emergency key deletion button. Similarly, the mobile unit 1, 2, 3 may be activated to delete the encryption keys by the tamper protection circuitry and therefore need to proceed to delete the keys without input from a user. In any such case, the mobile radio unit 1, 2, 3 uses an "emergency" key deletion procedure.

In the emergency key deletion procedure, the mobile unit 1, 2, 3 deletes all of the TEKs, KEK and OEK at once. No delete attempt indication or delete report 10 is sent and a delete advice message is only sent after deletion of all of the TEKs, KEK and OEK.

More specifically, the mobile station 1, 2, 3 first deletes the TEKs and KEK. It then encrypts a delete advice message 14 indicating successful deletion of all of the TEKs, KEK and OEK. The delete advice message 14 has encryption synchronisation 29, deletion advice 30 indicating in this case that the deletion is the result of a "user-initiated emergency deletion" or "mobile unit initiated emergency key deletion", a deletion reason 31, an acknowledgement type 32, a number of keys 33, serial numbers 34 to 37 for the deleted TEKs and KEK, and soon to be deleted OEK, a time stamp 38 and CRC 39.

In this example, multiple delete advice messages 14 are encrypted having different encryption synchronisation 29 in order that the mobile unit 1, 2, 3 can attempt to send a delete advice message repeatedly after deletion of the OEK. Thus, after deletion of the OEK the mobile unit 1, 2, 3 can send a first delete advice message 14 and, if it does not receive an acknowledgement message 16, it can send a further delete advice message having encryption synchronisation 29 suitable for the later time.

The acknowledgement type 32 is set, in this example, to request the key management controller 8 to return an acknowledgement 16 that is not encrypted. The acknowledgement itself could be marked as not encrypted by setting the initialisation vector to '0', as discussed above. In another example, the acknowledgement type may request that the IV of the delete advice message 14 being acknowledged by the key management controller 8 should be used to encrypt the acknowledgement message.

In the event of an interruption to the power supply of the mobile unit 1, 2, 3 it is important that the mobile unit makes every attempt to inform the key management controller 8 of the key deletion. Thus, at each stage of the key deletion process, whether a non-emergency key deletion or emergency key deletion, the status of the procedure is stored in a non-volatile memory. When power is restored to the mobile unit 1, 2, 3, it looks in the non-volatile memory to determine whether or not a key deletion procedure was in progress when power was interrupted. If this is the case, the key deletion procedure is continued from the point at which it finished. Thus, if for example during the tampering with a mobile unit 1, 2, 3 an unauthorised user manages to remove the power supply from the mobile unit 1, 2, 3 before the key deletion process has been completed, the key deletion process will continue when the unauthorised user next supplies power to the mobile unit 1, 2, 3.

In response to the messages 10, 12, 14 and 45 that may be received by the key management controller 8 from mobile units 1, 2, 3 the key management controller 8 determines whether or not it is likely that an encryption key has been compromised. This information may be stored in a database of the key management controller 8 and used, in particular, to decide whether or not a KEK should be continued to be used.

In a first example, where the key management controller 8 receives a delete attempt indication or delete report message 10, followed shortly thereafter by a delete advice message indicating that a number of encryption keys have been deleted it can conclude that the encryption keys listed in the delete advice message 12, 14 have been successfully deleted under a non-emergency key deletion procedure. The key management controller 8 can therefore continue to use any TEKs which have been deleted.

In another example, where the key management controller 8 receives a delete report message 10 and shortly thereafter a delete failure message 45 it can conclude that the encryption keys listed in the delete failure message have not been successfully deleted and discontinue use of any TEKs not so deleted. Similarly, where a delete report message 10 is received and no further messages are received from that mobile unit 1, 2, 3, the key management controller 8 may conclude that the user of the mobile station 1, 2, 3 attempted to delete the encryption keys held in the mobile unit 1, 2, 3 and the deletion procedure was not successful (for example because power was interrupted to the unit). The key management controller 8 may therefore conclude that the encryption keys may well have been compromised and discontinue use of any TEKs stored in that mobile radio unit 1, 2, 3.

Furthermore, when the key management controller 8 receives a delete advice message, it reads the time stamp 38 and compares this with the time that it actually receives the delete advice message 14. If the time period between the time stamp 38 and the time of receipt of the delete advice message 14 is short, the key management controller 8 may conclude that the key deletion procedure has been carried out normally and that it is likely that the encryption keys listed in the delete advice message has not been compromised. Alternatively, where the time period between the time stamp 38 and the time of receipt of the delete advice message 14 is large, the key management controller 8 may conclude that the key deletion procedure has been carried out abnormally (for example there has been a power failure after preparation of the delete advice message 14 but before it is sent by the mobile unit 1, 2, 3) and decide to discontinue use of the encryption keys listed in the delete advice message 14. Furthermore, the key management controller 8 may decide to use conventional OTAR messages to "stun" or "kill" the mobile unit 1, 2, 3. Where the time period between the time stamp 38 and the time of receipt of the delete advice message 14 is in between the two values above, the key management controller 8 may assign a level of confidence to the possibility that the encryption keys listed in the delete advice message 14 have been deleted. Independent verification of the deletion of the keys from the mobile unit 1, 2, 3 may then be requested or initiated.

## Claims

1. A method of operating a mobile radio communication system, which system comprises one or more mobile radio units (1, 2, 3) which operate in the system and an encryption key management controller (8) for controlling the use of encryption keys by the mobile radio unit(s) of the system for the encryption or decryption of radio transmissions, the method comprising: a user or a mobile radio unit (1, 2, 3) initiating deletion of an encryption key; and being **characterised by** comprising: the mobile radio unit (1, 2, 3) attempting to send one or more encryption key deletion reports to the key management controller (8) in response to such a deletion initiation event; and the key management controller (8) deciding whether or not to replace or discard an encryption key as the result of a determination based on the encryption key deletion report(s).

2. A method of operating a mobile radio unit (1, 2, 3) in a mobile radio communication system, which system incorporates an encryption key management controller (8) for controlling the use of encryption keys by mobile radio units (1, 2, 3) of the system for the encryption or decryption of radio transmissions, the method comprising: a user or the mobile radio unit (1, 2, 3) initiating deletion of an encryption key; and being **characterised by** comprising: the mobile radio unit attempting to send one or more encryption key deletion reports to the key management controller (8) in response to such a deletion initiation event.

3. The method of claim 1 or claim 2, wherein the report or one or more of the reports comprises a delete attempt indication, reporting that the mobile radio unit (1, 2, 3) is going to attempt to delete the encryption key.

4. The method of claim 3, wherein the key management controller (8) registers that the mobile unit is going to try to delete the encryption key on receipt of the delete attempt indication.

5. The method of claim 1 or claim 2, wherein the report or one or more of the reports comprises a delete successful indication, reporting that the encryption key has been successfully deleted.

6. The method of claim 5, wherein the key management controller (8) allows the system to continue to use the key on receipt of the delete successful indication.

7. The method of claim 5 or claim 6, wherein the mobile unit (1, 2, 3) verifies that the deletion of the encryption key has been successfully completed before reporting successful deletion to the key management controller (8).

8. The method of any one of the preceding claims, wherein the mobile unit (1, 2, 3) attempts to send a delete attempt indication to the key management controller (8) after key deletion is initiated and attempts to send a delete successful indication after verification that the encryption key has been deleted.

9. The method of claim 1 or claim 2, wherein the report or one or more of the reports comprises a delete unsuccessful indication, reporting that the key was not successfully deleted.

10. The method of claim 9, wherein the key management controller (8) replaces or discards the encryption key after receipt of the delete unsuccessful indication.

11. The method of any one of the preceding claims, wherein the initiation of key deletion comprises initiation of the deletion of only a first type of encryption key.

12. The method of any one of the preceding claims, wherein the initiation of key deletion comprises initiation of the deletion of the communication encryption key currently being used to encrypt communications over the radio communication system.

13. The method of any one of claims 1 to 10, wherein the initiation of key deletion comprises initiation of the deletion of all encryption keys stored by the mobile radio unit (1, 2, 3).

14. The method of any one of the preceding claims, wherein, on receipt of a key deletion report, the key management controller (8) sends an acknowledgement message to the mobile unit that sent the report.

15. The method of any one of the preceding claims, wherein the mobile radio unit repeatedly attempts to send a key deletion report until an acknowledgement of the report is received from the key management controller (8).

16. The method of claim 15, wherein the mobile radio unit (1, 2, 3) limits the number of times or time period for which it attempts to send a key deletion report whilst awaiting an acknowledgement.

17. The method of any one of the preceding claims, wherein the key deletion report is sent in an unencrypted form.

18. The method of any one of claims 1 to 16, wherein the mobile radio unit (1, 2, 3) encrypts the key deletion report using the encryption key to be deleted before deleting the encryption key.

19. The method of any one of the preceding claims, wherein the mobile radio unit (1, 2, 3) encrypts plural possible key deletion reports using the encryption key to be deleted, before deleting the encryption key.

20. The method of any one of the preceding claims, wherein the mobile radio unit (1, 2, 3) encrypts plural key deletion reports using the encryption key to be deleted, which reports are suitable for sending at different times, before deleting the encryption key.

21. The method of any one of the preceding claims, wherein the key deletion report includes an indication of whether or not an acknowledgement to be sent by the key management controller (8) should be encrypted.

22. The method of any one of claims 1 to 21, wherein the key management controller (8) determines whether or not the deletion report is reporting deletion of the key it uses to encrypt an acknowledgement of the report and, if so, sends the acknowledgement unencrypted.

23. The method of any one of claims 1 to 21, wherein the mobile radio unit (1, 2, 3) encrypts, using the encryption key to be deleted, an acknowledgement that it expects to later receive from the key management controller before deleting the encryption key.

24. The method of any one of the preceding claims, wherein a predetermined Initialisation Vector is used to encrypt acknowledgements sent by the key management controller.

25. The method of any one of claims 1 to 23, wherein the Initialisation Vector of a key deletion report received by the key management controller is used to encrypt an acknowledgement sent by the key management controller.

26. The method of any one of claims 1 to 23, wherein an Initialisation Vector derived in a predetermined manner from the Initialisation Vector of a key deletion report received by the key management controller is used to encrypt an acknowledgement sent by the key management controller.

27. The method of any one of the preceding claims, wherein the encryption key deletion reports contain an indication of the time at which the mobile unit deleted the key and the key management controller (8) determines whether or not to replace or discard the deleted encryption key on the basis of the difference between the time indication in the report and the time the report is received by the key management controller.

28. Computer software specifically adapted to carry out the method of any one of claims 1 to 27 when installed on data processing means.

29. A mobile radio communication system comprising: one or more mobile radio units (1, 2, 3) which operate in the system; and an encryption key management controller (8) for controlling the use of encryption keys by the mobile radio unit(s) of the system for the encryption or decryption of radio transmissions, wherein the mobile radio unit(s) comprise: means for a user or the mobile radio unit to initiate deletion of an encryption key; and **characterised in that** the mobile radio unit(s) comprise means for the mobile radio unit (1, 2, 3) to attempt to send one or more encryption key deletion reports to the key management controller in response to such a deletion initiation event, and **in that** the key management controller (8) comprises means for deciding whether as not to replace or discard an encryption key as the result of a determination based on the encryption key deletion report(s).

30. The mobile radio communication system of claim 29, further comprising a communication system infrastructure (7) which incorporates the encryption key management controller (8) and via which the mobile units (1, 2, 3) of the system communicate and wherein the mobile radio unit(s) attempt to send the one or more encryption key deletion reports to the key management controller via the system infrastructure.

31. The mobile radio communication system of claim 29 or claim 30, wherein the key management controller registers that the mobile unit (1, 2, 3) is going to try to delete the encryption key on receipt of an encryption deletion report comprising a delete attempt indication, reporting that the mobile radio unit is going to attempt to delete the encryption key.

32. The mobile radio communication system of claim 29 or claim 30, wherein the key management controller (8) allows the system to continue to use the key on receipt of an encryption key deletion report comprising a delete successful indication, reporting that the encryption key has been successfully deleted.

33. The mobile radio communication system of claim 29 or claim 30, wherein the key management controller (8) replaces or discards the encryption key after receipt of an encryption key deletion report comprising a delete unsuccessful indication, reporting that the encryption key was not successfully deleted.

34. The mobile radio communication system of any one of claims 29 to 33, wherein the initiation of key deletion comprises initiation of the deletion of the communication encryption key currently being used to encrypt communications over the radio communication system.

35. The mobile radio communication system of any one of claims 29 to 33, wherein the initiation of key deletion comprises initiation of the deletion of all encryption keys stored by the mobile radio unit (1, 2, 3).

36. The mobile radio communication system of any one of claims 29 to 35, wherein the key management controller (8) further comprises means for sending an acknowledgement to a mobile unit in response to a deletion report received from the mobile unit.

37. The mobile radio communication system of claim 36, wherein a predetermined Initialisation Vector is used to encrypt acknowledgements sent by the key management controller (8).

38. A mobile radio unit (1, 2, 3) for operation in a mobile radio communication system, which system incorporates an encryption key management controller (8) for controlling the use of encryption keys by mobile radio units of the system for the encryption or decryption of radio transmissions, the mobile radio unit comprising: means for a user or the mobile radio unit to initiate deletion of an encryption key; and being **characterised by** comprising: means for attempting to send one or more encryption key deletion reports to the key management controller (8) in response to such a deletion initiation event.

39. The mobile radio unit of claim 38, wherein the report or one or more of the reports comprises a delete successful indication, reporting that the encryption key has been successfully deleted.

40. The mobile radio unit of claim 38, wherein the report or one or more of the reports comprises a delete unsuccessful indication, reporting that the key was not successfully deleted.

41. The mobile radio unit (1, 2, 3) of any one of claims 38 to 40, wherein the initiation of key deletion comprises initiation of the deletion of the communication encryption key currently being used to encrypt communications over the radio communication system.

42. The mobile radio unit of any one of claims 38 to 41, wherein the initiation of key deletion comprises initiation of the deletion of all encryption keys stored by the mobile radio unit (1, 2, 3).

43. The mobile radio unit of any one of claims 38 to 41, wherein the mobile radio unit (1, 2, 3) has means for optionally initiating deletion of one of more encryption keys from the mobile radio unit.

44. The mobile radio unit of any one of claims 38 to 43, wherein the means for attempting to send one or more key deletion reports repeatedly attempts to send a key deletion report until an acknowledgement of the report is received from the key management controller.

45. The mobile radio unit of any one of claims 38 to 44, further comprising a counter which counts the number of attempts to send a key deletion report and, after a predetermined number of attempts to send the report without an acknowledgement being received, stops the mobile unit sending the report.

46. The mobile radio unit of any one of claims 38 to 45, further comprising means for encrypting the key deletion report using the encryption key to be deleted before deleting the encryption key.

47. The mobile radio unit of any one of claims 38 to 46, further comprising a memory for storing the current point in the key deletion procedure.

48. The mobile radio unit of claim 47, wherein the memory indicates whenever the power supply is switched on or restored to the mobile unit if the mobile radio unit was part way through a key deletion procedure and means for resuming the key deletion procedure in that event.

49. The mobile radio unit of any one of claims 38 to 48, further comprising means for indicating to a user that key deletion report has been received by the key management controller (8) in response to an acknowledgement received by the mobile radio unit (1, 2, 3) from the key management controller.

50. The mobile unit of any one of claims 38 to 49, further comprising means for seeking confirmation from the user before deleting an encryption key.

51. The mobile radio unit of any one of claims 38 to 50, further comprising means for ignoring power supply off commands during a key deletion procedure.

52. The mobile radio communication system of any one of claims 29 to 37, wherein the encryption key deletion reports contain an indication of the time at which the respective mobile unit deleted the key and the key management controller (8) has means for determining whether or not to replace or discard the deleted encryption key on the basis of the difference between the time indication in the report and the time the report is received by the key management controller.

## Patentansprüche

1. Verfahren zum Betreiben eines Mobilfunk-Kommunikationssystems, wobei das System eine oder mehrere Mobilfunkeinheiten (1, 2, 3) aufweist, die in dem System arbeiten, und eine Verschlüsselungs- bzw. Chiffrierungsschlüssel-Verwaltungssteuerung (8), um die Verwendung der Chiffrierungsschlüssel durch die Mobilfunkeinheit bzw. die Mobilfunkeinheiten des Systems zu steuern bzw. zu kontrollieren für die Verschlüsselung oder Entschlüsselung von Funkübertragungen, wobei das Verfahren die folgenden Schritte umfasst: ein Nutzer oder eine Mobilfunkeinheit (1, 2, 3) initiiert eine Löschung eines Chiffrierungsschlüssels, und **dadurch gekennzeichnet ist, dass** die Mobilfunkeinheit (1, 2, 3) versucht, einen oder mehrere Chiffrierungsschlüssel-Löschungsberichte zu der Schlüsselverwaltungssteuerung (8) in Reaktion auf ein solches Löschungsinitiierungsereignis zu senden, und die Schlüsselverwaltungssteuerung (8) entscheidet, ob ein Chiffrierungsschlüssel als das Ergebnis einer Bestimmung basierend auf dem Chiffrierungsschlüssel-Löschungsbericht bzw. den Chiffrierungsschlüssel-Löschungsberichten ersetzt bzw. ausgetauscht oder verworfen wird.

2. Verfahren zum Betreiben einer Mobilfunkeinheit (1, 2, 3) in einem Mobilfunk-Kommunikationssystem, wobei das System eine Chiffrierungsschlüssel-Verwaltungssteuerung (8) aufweist, um die Verwendung von Chiffrierungsschlüsseln durch Mobilfunkeinheiten (1, 2, 3) des Systems für die Verschlüsselung oder Entschlüsselung von Funkübertragungen zu steuern, wobei das Verfahren folgenden Schritt umfasst: ein Nutzer oder die Mobilfunkeinheit (1, 2, 3) initiiert eine Löschung eines Chiffrierungsschlüssels, und **dadurch gekennzeichnet ist, dass** die Mobilfunkeinheit versucht, einen oder mehrere Chiffrierungsschlüssel-Löschungsberichte zu der Schlüsselverwaltungssteuerung (8) in Reaktion auf ein solches Löschungsinitiierungsereignis zu senden.

3. Verfahren nach Anspruch 1 oder 2, bei dem der Bericht oder einer oder mehrere der Berichte einen Löschungsversuchhinweis umfasst, der berichtet, dass die Mobilfunkeinheit (1, 2, 3) versuchen wird, den Chiffrierungsschlüssel zu löschen.

4. Verfahren nach Anspruch 3, bei dem die Schlüsselverwaltungssteuerung (8) registriert, dass die Mobileinheit versuchen wird, den Chiffrierungsschlüssel bei Empfang des Löschungsversuchhinweises zu löschen.

5. Verfahren nach Anspruch 1 oder 2, bei dem der Bericht oder einer oder mehrere der Berichte einen Löschungserfolghinweis umfasst, der berichtet, dass der Chiffrierungsschlüssel erfolgreich gelöscht wurde.

6. Verfahren nach Anspruch 5, bei dem die Schlüsselverwaltungssteuerung (8) dem System erlaubt, mit der Verwendung des Schlüssels bei Empfang des Schlüsselerfolghinweises fortzufahren.

7. Verfahren nach Anspruch 5 oder 6, bei dem die Mobileinheit (1, 2, 3) verifiziert, dass die Löschung des Chiffrierungsschlüssels erfolgreich abgeschlossen wurde, bevor eine erfolgreiche Löschung zu der Schlüsselverwaltungssteuerung (8) berichtet wird.

8. Verfahren nach einem der vorstehenden Ansprüche, bei dem die Mobileinheit (1, 2, 3) versucht, einen Löschungsversuchhinweis zu der Schlüsselverwaltungssteuerung (8) zu senden, nachdem eine Schlüssellöschung initiiert wurde, und versucht, einen Löschungserfolghinweis nach einer Verifikation zu senden, dass der Chiffrierungsschlüssel gelöscht wurde.

9. Verfahren nach Anspruch 1 oder 2, bei dem der Bericht oder einer oder mehrere der Berichte einen Löschungserfolgloshinweis umfasst, der berichtet, dass der Schlüssel nicht erfolgreich gelöscht wurde.

10. Verfahren nach Anspruch 9, bei dem die Schlüsselverwaltungssteuerung (8) den Chiffrierungsschlüssel nach Empfang des Löschungserfolgloshinweises ersetzt oder verwirft.

11. Verfahren nach einem der vorstehenden Ansprüche, bei dem die Initiierung der Schlüssellöschung eine Initiierung der Löschung lediglich eines ersten Typs eines Chiffrierungsschlüssels umfasst.

12. Verfahren nach einem der vorstehenden Ansprüche, bei dem die Initiierung einer Schlüssellöschung eine Initiierung der Löschung des Kommunikation-ChiffrierungsSchlüssels umfasst, der gegenwärtig verwendet wird, um Kommunikationen über das Funkkommunikationssystem zu verschlüsseln.

13. Verfahren nach einem der Ansprüche 1 bis 10, bei dem die Initiierung einer Schlüssellöschung eine Initiierung der Löschung aller Chiffrierungsschlüssel umfasst, die von der Mobilfunkeinheit (1, 2, 3) gespeichert werden.

14. Verfahren nach einem der vorstehenden Ansprüche, bei dem bei Empfang eines Schlüssellöschungsberichts die Schlüsselverwaltungssteuerung (8) eine Bestätigungsnachricht zu der Mobileinheit sendet, die den Bericht sendete.

15. Verfahren nach einem der vorstehenden Ansprüche, bei dem die Mobilfunkeinheit wiederholt versucht, einen Schlüssellöschungsbericht zu senden, bis eine Bestätigung des Berichts von der Schlüsselverwaltungssteuerung (8) empfangen wird.

16. Verfahren nach Anspruch 15, bei dem die Mobilfunkeinheit (1, 2, 3) die Anzahl an Malen oder eine Zeitdauer beschränkt, für die diese versucht, einen Schlüssellöschungsbericht zu senden, während eine Bestätigung erwartet wird.

17. Verfahren nach einem der vorstehenden Ansprüche, bei dem der Schlüssellöschungsbericht in einer unverschlüsselten Form gesendet wird.

18. Verfahren nach einem der Ansprüche 1 bis 16, bei dem die Mobilfunkeinheit (1, 2, 3) den Schlüssellöschungsbericht verschlüsselt, wobei der Chiffrierungsschlüssel, der zu löschen ist, vor dem Löschen des Chiffrierungsschlüssels verwendet wird.

19. Verfahren nach einem der vorstehenden Ansprüche, bei dem die Mobilfunkeinheit (1, 2, 3) mehrere mögliche Schlüssellöschungsberichte verschlüsselt, wobei der Chiffrierungsschlüssel, der zu löschen ist, vor dem Löschen des Chiffrierungsschlüssels gelöscht wird verwendet wird.

20. Verfahren nach einem der vorstehenden Ansprüche, bei dem die Mobilfunkeinheit (1, 2, 3) mehrere Schlüssellöschungsberichte verschlüsselt, wobei der Chiffrierungsschlüssel verwendet wird, der zu löschen ist, dessen Berichte geeignet sind, zu verschiedenen Zeiten zu senden, bevor der Chiffrierungsschlüssel gelöscht wird.

21. Verfahren nach einem der vorstehenden Ansprüche, bei dem der Schlüssellöschungsbericht einen Hinweis enthält, ob eine Bestätigung, die durch die Schlüsselverwaltungssteuerung (8) zu senden ist, verschlüsselt werden sollte oder nicht.

22. Verfahren nach einem der Ansprüche 1 bis 21, bei dem die Schlüsselverwaltungssteuerung (8) bestimmt, ob der Löschungsbericht eine Löschung des Schlüssels berichtet oder nicht, die diese verwendet, um eine Bestätigung des Berichts zu verschlüsseln und, wenn dies so ist, die Bestätigung unverschlüsselt sendet.

23. Verfahren nach einem der Ansprüche 1 bis 21, bei dem die Mobilfunkeinheit (1, 2, 3), wobei der Chiffrierungsschlüssel, der zu löschen ist, verwendet wird, eine Bestätigung verschlüsselt, die diese erwartet, später von der Schlüsselverwaltungssteuerung zu empfangen, bevor der Chiffrierungsschlüssel gelöscht wird.

24. Verfahren nach einem der vorstehenden Ansprüche, bei dem ein vorbestimmter Initialisierungsvektor verwendet wird, um Bestätigungen zu verschlüsseln, die von der Schlüsselverwaltungssteuerung gesendet werden.

25. Verfahren nach einem der Ansprüche 1 bis 23, bei dem der Initialisierungsvektor eines Schlüssellöschungsberichts, der von der Schlüsselverwaltungssteuerung empfangen wird, verwendet wird, um eine Bestätigung zu verschlüsseln, die von der Schlüsselverwaltungssteuerung gesendet wird.

26. Verfahren nach einem der Ansprüche 1 bis 23, bei dem ein Initialisierungsvektor, der auf eine vorbestimmte Weise von dem Initialisierungsvektor eines Schlüssellöschungsberichts abgeleitet ist, der von der Schlüsselverwaltungssteuerung empfangen wird, verwendet wird, um eine Bestätigung zu verschlüsseln, die von der Schlüsselverwaltungssteuerung gesendet wird.

27. Verfahren nach einem der vorstehenden Ansprüche, bei dem die Chiffrierungsschlüssel-Löschungsberichte einen Hinweis zu dem Zeitpunkt enthalten, bei dem die Mobileinheit den Schlüssel löschte und die Schlüsselverwaltungssteuerung (8) bestimmt, ob der gelöschte Chiffrierungsschlüssel auf der Basis des Unterschieds zwischen dem Zeithinweis in dem Bericht und dem Zeitpunkt, zu dem der Bericht von der Schlüsselverwaltungssteuerung empfangen wird, ersetzt oder verworfen wird.

28. Computersoftware, die insbesondere ausgelegt ist, das Verfahren nach einem der Ansprüche 1 bis 27 durchzuführen, wenn dieses auf einem Datenverarbeitungsmittel installiert ist.

29. Mobilfunk-Kommunikationssystem mit: einer oder mehreren Mobilfunkeinheiten (1, 2, 3), die in dem System arbeiten, und einer Chiffrierungsschlüssel-Verwaltungssteuerung (8) zum Steuern der Verwendung von Chiffrierungsschlüsseln durch die Mobilfunkeinheit(en) des Systems für die Verschlüsselung oder Entschlüsselung von Funkübertragungen, wobei die Mobilfunkeinheit(en) umfasst bzw. umfassen: ein Mittel für einen Nutzer oder die Mobilfunkeinheit, um eine Löschung eines Chiffrierungsschlüssels zu initiieren, und **dadurch gekennzeichnet ist, dass** die Mobilfunkeinheit(en) ein Mittel für die Mobilfunkeinheit (1, 2, 3) aufweist bzw. aufweisen, um zu versuchen, einen oder mehrere Chiffrierungsschlüssel-Löschungsberichte zu der Schlüsselverwaltungssteuerung in Reaktion auf ein solches Löschungsinitiierungsereignisses zu senden, und **dadurch**, dass die Schlüsselverwaltungssteuerung (8) ein Mittel aufweist, um zu entscheiden, ob ein Chiffrierungsschlüssel als das Ergebnis einer Bestimmung basierend auf dem bzw. den Chiffrierungsschlüssel-Löschungsbericht(en) ersetzt oder verworfen wird.

30. Mobilfunk-Kommunikationssystem nach Anspruch 29, das weiterhin eine Kommunikationssystem-Infrastruktur (7) aufweist, die die Chiffrierungsschlüssel-Verwaltungssteuerung (8) umfasst und über die die Mobileinheiten (1, 2, 3) des Systems kommunizieren und wobei die Mobilfunkeinheit(en) versucht bzw. versuchen, den einen oder die mehreren Chiffrierungsschlüssel-Löschungsberichte zu der Schlüsselverwaltungssteuerung über die Systeminfrastruktur zu senden.

31. Mobilfunk-Kommunikationssystem nach Anspruch 29 oder 30, bei dem die Schlüsselverwaltungssteuerung registriert, dass die Mobileinheit (1, 2, 3) versuchen wird, den Chiffrierungsschlüssel bei Empfang eines Verschlüsselungslöschungsberichts zu löschen, der einen Löschungsversuchhinweis umfasst, der berichtet, dass die Mobilfunkeinheit versuchen wird, den Chiffrierungsschlüssel zu löschen.

32. Mobilfunk-Kommunikationssystem nach Anspruch 29 oder 30, bei dem die Schlüsselverwaltungssteuerung (8) dem System ermöglicht, mit der Verwendung des Schlüssels bei Empfang eines Chiffrierungsschlüssel-Löschungsberichts fortzufahren, der einen Löschungserfolghinweis umfasst, der berichtet, dass der Chiffrierungsschlüssel erfolgreich gelöscht wurde.

33. Mobilfunk-Kommunikationssystem nach Anspruch 29 oder 30, bei dem die Schlüsselverwaltungssteuerung (8) den Chiffrierungsschlüssel nach Empfang eines Chiffrierungsschlüssel-Löschungsberichts ersetzt oder verwirft, der einen Löschungserfolgloshinweis umfasst, der berichtet, dass der Chiffrierungsschlüssel nicht erfolgreich gelöscht wurde.

34. Mobilfunk-Kommunikationssystem nach einem der Ansprüche 29 bis 33, bei dem die Initiierung einer Schlüssellöschung eine Initiierung der Löschung des Kommunikations-Chiffrierungsschlüssels umfasst, der gegenwärtig verwendet wird, um Kommunikationen über das Funkkommunikationssystem zu verschlüsseln.

35. Mobilfunk-Kommunikationssystem nach einem der Ansprüche 29 bis 33, bei dem die Initiierung einer Schlüssellöschung eine Initiierung der Löschung aller Chiffrierungsschlüssel umfasst, die von der Mobilfunkeinheit (1, 2, 3) gespeichert werden.

36. Mobilfunk-Kommunikationssystem nach einem der Ansprüche 29 bis 35, bei dem die Schlüsselverwaltungssteuerung (8) weiterhin ein Mittel umfasst, um eine Bestätigung zu einer Mobileinheit in Reaktion auf einen Löschungsbericht zu senden, der von der Mobileinheit empfangen wird.

37. Mobilfunk-Kommunikationssystem nach Anspruch 36, bei dem ein vorbestimmter Initialisierungsvektor verwendet wird, um Bestätigungen zu verschlüsseln, die von der Schlüsselverwaltungssteuerung (8) gesendet werden.

38. Mobilfunkeinheit (1, 2, 3) zum Betrieb in einem Mobilfunk-Kommunikationssystem, wobei das System eine Chiffrierungsschlüssel-Verwaltungssteuerung (8) umfasst, um die Verwendung von Chiffrierungsschlüsseln durch Mobilfunkeinheiten des Systems zu steuern, für die Verschlüsselung oder Entschlüsselung von Funkübertragungen, wobei die Mobilfunkeinheit ein Mittel für einen Nutzer oder die Mobilfunkeinheit aufweist, um eine Löschung eines Chiffrierungsschlüssels zu initiieren, und **dadurch gekennzeichnet ist, dass** es ein Mittel aufweist, um zu versuchen, einen oder mehrere Chiffrierungsschlüssel-Löschungsberichte zu der Schlüsselverwaltungssteuerung (8) in Reaktion auf ein solches Löschungsinitiierungsereignis zu senden.

39. Mobilfunkeinheit nach Anspruch 38, bei der der Bericht oder einer oder mehrere der Berichte einen Löschungserfolghinweis umfasst bzw. umfassen, der berichtet, dass der Chiffrierungsschlüssel erfolgreich gelöscht wurde.

40. Mobilfunkeinheit nach Anspruch 38, bei der der Bericht oder einer oder mehrere der Berichte einen Löschungserfolgloshinweis umfasst bzw. umfassen, der berichtet, dass der Schlüssel nicht erfolgreich gelöscht wurde.

41. Mobilfunkeinheit (1, 2, 3) nach einem der Ansprüche 38 bis 40, bei der die Initiierung einer Schlüssellöschung eine Initiierung der Löschung des Kommunikationschiffrierungsschlüssels umfasst, der gegenwärtig verwendet wird, um Kommunikationen über das Funkkommunikationssystem zu verschlüsseln.

42. Mobilfunkeinheit nach einem der Ansprüche 38 bis 41, bei der die Initiierung einer Schlüssellöschung eine Initiierung der Löschung aller Chiffrierungsschlüssel umfasst, die von der Mobilfunkeinheit (1, 2, 3) gespeichert werden.

43. Mobilfunkeinheit nach einem der Ansprüche 38 bis 41, bei der die Mobilfunkeinheit (1, 2, 3) ein Mittel aufweist, um optional eine Löschung von einem oder mehreren Chiffrierungsschlüssel von der Mobilfunkeinheit zu initiieren.

44. Mobilfunkeinheit nach einem der Ansprüche 38 bis 43, bei der das Mittel, um zu versuchen, einen oder mehrere Schlüssellöschungsberichte zu senden, wiederholt versucht, einen Schlüssellöschungsbericht zu senden, bis eine Bestätigung des Berichts von der Schlüsselverwaltungssteuerung empfangen wird.

45. Mobilfunkeinheit nach einem der Ansprüche 38 bis 44, die weiterhin einen Zähler aufweist, der die Anzahl an Versuchen zählt, einen Schlüssellöschungsbericht zu senden, und nach einer vorbestimmten Anzahl von Versuchen, den Bericht zu senden, ohne dass eine Bestätigung empfangen wird, und die Mobileinheit stoppt, die den Bericht sendet.

46. Mobilfunkeinheit nach einem der Ansprüche 38 bis 45, die weiterhin ein Mittel aufweist, um den Schlüssellöschungsbericht zu verschlüsseln, wobei der Chiffrierungsschlüssel verwendet wird, der zu löschen ist, bevor der Chiffrierungsschlüssel gelöscht wird.

47. Mobilfunkeinheit nach einem der Ansprüche 38 bis 46, die weiterhin einen Speicher aufweist, um den gegenwärtigen Punkt in der Schlüssellöschungsprozedur zu speichern.

48. Mobilfunkeinheit nach Anspruch 47, bei der der Speicher anzeigt, wann immer die Leistungsversorgung eingeschaltet wird oder zu der Mobileinheit zurückgelegt wird, wenn die Mobilfunkeinheit auf halbem Weg durch eine Schlüssellöschungsprozedur war, und ein Mittel, um die Schlüssellöschungsprozedur in diesem Ereignis bzw. Fall wieder aufzunehmen.

49. Mobilfunkeinheit nach einem der Ansprüche 38 bis 48, die weiterhin ein Mittel aufweist, um einem Nutzer anzuzeigen, dass ein Schlüssellöschungsbericht von der Schlüsselverwaltungssteuerung (8) in Reaktion auf eine Bestätigung empfangen wurde, die von der Mobilfunkeinheit (1, 2, 3) von der Schlüsselverwaltungssteuerung empfangen wird.

50. Mobileinheit nach einem der Ansprüche 38 bis 49, die weiterhin ein Mittel aufweist, um eine Bestätigung von dem Nutzer vor einem Löschen eines Chiffrierungsschlüssels sucht.

51. Mobilfunkeinheit nach einem der Ansprüche 38 bis 50, die weiterhin ein Mittel aufweist, um Leistungsversorgungsausschaltkommandos während einer Schlüssellöschungsprozedur zu ignorieren.

52. Mobilfunkeinheit nach einem der Ansprüche 29 bis 37, bei der die Chiffrierungsschlüssel-Löschungsberichte einen Hinweis zu dem Zeitpunkt enthalten, bei dem die jeweilige Mobileinheit den Schlüssel löschte und die Schlüsselverwaltungssteuerung (8) ein Mittel aufweist, um zu bestimmen, ob der gelöschte Chiffrierungsschlüssel auf der Basis des Unterschieds zwischen dem Zeithinweis in dem Bericht und dem Zeitpunkt, zu dem der Bericht von der Schlüsselverwaltungssteuerung empfangen wird, ersetzt oder verworfen wird.

## Revendications

1. Procédé permettant de faire fonctionner un système de radiocommunications mobiles, lequel système comprend une ou plusieurs stations mobiles (1, 2, 3) qui fonctionnent dans le système, et un contrôleur de gestion de clé de chiffrement (8) destiné à contrôler l'utilisation de clés de chiffrement par la/les station(s) mobile(s) du système pour le chiffrement ou le déchiffrement de transmissions radio, le procédé comprenant : un utilisateur ou une station mobile (1, 2, 3) initiant la suppression d'une clé de chiffrement ; et étant **caractérisé en ce qu'**il comprend: la station mobile (1, 2, 3) tentant d'envoyer un ou plusieurs rapports de suppression de clé de chiffrement au contrôleur de gestion de clé (8) en réponse à cet événement d'initiation de suppression; et le contrôleur de gestion de clé (8) décidant s'il faut ou non remplacer ou écarter une clé de chiffrement à la suite d'une détermination basée sur le/les rapport(s) de suppression de clé de chiffrement.

2. Procédé permettant de faire fonctionner une station mobile (1, 2, 3) dans un système de radiocommunications mobiles, lequel système incorpore un contrôleur de gestion de clé de chiffrement (8) destiné à contrôler l'utilisation de clés de chiffrement par les stations mobiles (1, 2, 3) du système pour le chiffrement ou le déchiffrement de transmissions radio, le procédé comprenant : un utilisateur ou la station mobile (1, 2, 3) initiant la suppression d'une clé de chiffrement; et étant **caractérisé en ce qu'**il comprend: la station mobile tentant d'envoyer un ou plusieurs rapports de suppression de clé de chiffrement au contrôleur de gestion de clé (8) en réponse à cet événement d'initiation de suppression.

3. Procédé selon la revendication 1 ou 2, dans lequel le rapport ou un ou plusieurs des rapports comprend/comprennent une indication de tentative de suppression, indiquant que la station mobile (1, 2, 3) va tenter de supprimer la clé de chiffrement.

4. Procédé selon la revendication 3, dans lequel le contrôleur de gestion de clé (8) enregistre le fait que la station mobile va tenter de supprimer la clé de chiffrement à réception de l'indication de tentative de suppression.

5. Procédé selon la revendication 1 ou 2, dans lequel le rapport ou un ou plusieurs des rapports comprend/comprennent une indication de suppression réussie, indiquant que la clé de chiffrement a bien été supprimée.

6. Procédé selon la revendication 5, dans lequel le contrôleur de gestion de clé (8) permet au système de continuer à utiliser la clé à réception de l'indication de suppression réussie.

7. Procédé selon la revendication 5 ou 6, dans lequel la station mobile (1, 2, 3) vérifie que la suppression de la clé de chiffrement est bien terminée avant d'indiquer une suppression réussie au contrôleur de gestion de clé (8).

8. Procédé selon l'une quelconque des revendications précédentes, dans lequel la station mobile (1, 2, 3) tente d'envoyer une indication de tentative de suppression au contrôleur de gestion de clé (8) après que la suppression de clé est initiée et tente d'envoyer une indication de suppression réussie après vérification que la clé de chiffrement a été supprimée.

9. Procédé selon la revendication 1 ou 2, dans lequel le rapport ou un ou plusieurs des rapports comprend/comprennent une indication d'échec de suppression, indiquant que la clé n'a pas été supprimée.

10. Procédé selon la revendication 9, dans lequel le contrôleur de gestion de clé (8) remplace ou écarte la clé de chiffrement après réception de l'indication d'échec de suppression.

11. Procédé selon l'une quelconque des revendications précédentes, dans lequel l'initiation de la suppression de la clé comprend l'initiation de la suppression d'un premier type de clé de chiffrement seulement.

12. Procédé selon l'une quelconque des revendications précédentes, dans lequel l'initiation de la suppression de la clé comprend l'initiation de la suppression de la clé de chiffrement de communication présentement utilisée pour chiffrer les communications sur le système de radiocommunications.

13. Procédé selon l'une quelconque des revendications 1 à 10, dans lequel l'initiation de la suppression de la clé comprend l'initiation de la suppression de toutes les clés de chiffrement stockées par la station mobile (1, 2, 3).

14. Procédé selon l'une quelconque des revendications précédentes, dans lequel, à réception d'un rapport de suppression de clé, le contrôleur de gestion de clé (8) envoie un message d'accusé de réception à la station mobile qui a envoyé le rapport.

15. Procédé selon l'une quelconque des revendications précédentes, dans lequel la station mobile tente de façon répétée d'envoyer un rapport de suppression de clé jusqu'à ce qu'un accusé de réception du rapport soit reçu depuis le contrôleur de gestion de clé (8).

16. Procédé selon la revendication 15, dans lequel la station mobile (1, 2, 3) limite le nombre de fois ou la période temporelle pendant laquelle elle tente d'envoyer un rapport de suppression de clé alors qu'elle attend un accusé de réception.

17. Procédé selon l'une quelconque des revendications précédentes, dans lequel le rapport de suppression de clé est envoyé sous forme non chiffrée.

18. Procédé selon l'une quelconque des revendications 1 à 16, dans lequel la station mobile (1, 2, 3) chiffre le rapport de suppression de clé en utilisant la clé de chiffrement à supprimer avant de supprimer la clé de chiffrement.

19. Procédé selon l'une quelconque des revendications précédentes, dans lequel la station mobile (1, 2, 3) chiffre plusieurs rapports de suppression de clé possibles en utilisant la clé de chiffrement à supprimer avant de supprimer la clé de chiffrement.

20. Procédé selon l'une quelconque des revendications précédentes, dans lequel la station mobile (1, 2, 3) chiffre plusieurs rapports de suppression de clé possibles en utilisant la clé de chiffrement à supprimer, lesquels rapports sont adaptés pour être envoyés à différents moments, avant de supprimer la clé de chiffrement.

21. Procédé selon l'une quelconque des revendications précédentes, dans lequel le rapport de suppression de clé comprend une indication de si oui ou non un accusé de réception à envoyer par le contrôleur de gestion de clé (8) doit être chiffré.

22. Procédé selon l'une quelconque des revendications 1 à 21, dans lequel le contrôleur de gestion de clé (8) détermine si oui ou non le rapport de suppression indique la suppression de la clé qu'il utilise pour chiffrer un accusé de réception du rapport et si oui, envoie l'accusé de réception non chiffré.

23. Procédé selon l'une quelconque des revendications 1 à 21, dans lequel la station mobile (1, 2, 3) chiffre, en utilisant la clé de chiffrement à supprimer, un accusé de réception qu'elle s'attend à recevoir plus tard en provenance du contrôleur de gestion de clé, avant de supprimer la clé de chiffrement.

24. Procédé selon l'une quelconque des revendications précédentes, dans lequel un motif d'initialisation prédéterminé est utilisé pour chiffrer les accusés de réception envoyés par le contrôleur de gestion de clé.

25. Procédé selon l'une quelconque des revendications 1 à 23, dans lequel le motif d'initialisation d'un rapport de suppression de clé reçu par le contrôleur de gestion de clé est utilisé pour chiffrer un accusé de réception envoyé par le contrôleur de gestion de clé.

26. Procédé selon l'une quelconque des revendications 1 à 23, dans lequel un motif d'initialisation dérivé de manière prédéterminée à partir du motif d'initialisation d'un rapport de suppression de clé reçu par le contrôleur de gestion de clé est utilisé pour chiffrer un accusé de réception envoyé par le contrôleur de gestion de clé.

27. Procédé selon l'une quelconque des revendications précédentes, dans lequel les rapports de suppression de clé de chiffrement contiennent une indication du moment auquel la station mobile a supprimé la clé et le contrôleur de gestion de clé (8) détermine s'il faut ou non remplacer ou écarter la clé de chiffrement supprimée sur la base de la différence entre l'indication temporelle dans le rapport et le moment où le rapport est reçu par le contrôleur de gestion de clé.

28. Logiciel informatique spécialement adapté pour exécuter le procédé de l'une quelconque des revendications 1 à 27 lorsqu'il est installé sur un moyen de traitement de données.

29. Système de radiocommunications mobiles comprenant : une ou plusieurs stations mobiles (1, 2, 3) qui fonctionnent dans le système ; et un contrôleur de gestion de clé de chiffrement (8) destiné à contrôler l'utilisation de clés de chiffrement par la/les station(s) mobile(s) du système pour le chiffrement ou le déchiffrement de transmissions radio, dans lequel la/les station(s) mobile(s) comprend/comprennent : des moyens permettant à un utilisateur ou à la station mobile d'initier la suppression d'une clé de chiffrement ; et **caractérisé en ce que** la/les station(s) mobile(s) comprend/comprennent des moyens permettant à la station mobile (1, 2, 3) de tenter d'envoyer un ou plusieurs rapports de suppression de clé de chiffrement au contrôleur de gestion de clé en réponse à cet événement d'initiation de suppression, et **en ce que** le contrôleur de gestion de clé (8) comprend des moyens permettant de décider s'il faut ou non remplacer ou écarter une clé de chiffrement à la suite d'une détermination basée sur le/les rapport(s) de suppression de clé de chiffrement.

30. Système de radiocommunications mobiles selon la revendication 29, comprenant en outre une infrastructure de système de communication (7) qui incorpore le contrôleur de gestion de clé de chiffrement (8) et via laquelle les stations mobiles (1, 2, 3) du système communiquent et dans lequel la/les station(s) mobile(s) tente/tentent d'envoyer le/les rapport(s) de suppression de clé de chiffrement au contrôleur de gestion de clé via l'infrastructure de système.

31. Système de radiocommunications mobiles selon la revendication 29 ou 30, dans lequel le contrôleur de gestion de clé enregistre le fait que la station mobile (1, 2, 3) va tenter de supprimer la clé de chiffrement à réception d'un rapport de suppression de clé de chiffrement comprenant une indication de tentative de suppression, indiquant que la station mobile va tenter de supprimer la clé de chiffrement.

32. Système de radiocommunications mobiles selon la revendication 29 ou 30, dans lequel le contrôleur de gestion de clé (8) permet au système de continuer à utiliser la clé à réception d'un rapport de suppression de clé de chiffrement comprenant une indication de suppression réussie, indiquant que la clé de chiffrement a bien été supprimée.

33. Système de radiocommunications mobiles selon la revendication 29 ou 30, dans lequel le contrôleur de gestion de clé (8) remplace ou écarte la clé de chiffrement après réception d'un rapport de suppression de clé de chiffrement comprenant une indication d'échec de suppression, indiquant que la clé de chiffrement n'a pas été supprimée.

34. Système de radiocommunications mobiles selon l'une quelconque des revendications 29 à 33, dans lequel l'initiation de la suppression de la clé comprend l'initiation de la suppression de la clé de chiffrement de communication présentement utilisée pour chiffrer les communications sur le système de radiocommunications.

35. Système de radiocommunications mobiles selon l'une quelconque des revendications 29 à 33, dans lequel l'initiation de la suppression de la clé comprend l'initiation de la suppression de toutes les clés de chiffrement stockées par la station mobile (1, 2, 3).

36. Système de radiocommunications mobiles selon l'une quelconque des revendications 29 à 35, dans lequel le contrôleur de gestion de clé (8) comprend en outre des moyens permettant d'envoyer un accusé de réception à une station mobile en réponse à un rapport de suppression reçu depuis la station mobile.

37. Système de radiocommunications mobiles selon la revendication 36, dans lequel un motif d'initialisation prédéterminé est utilisé pour chiffrer les accusés de réception envoyés par le contrôleur de gestion de clé (8).

38. Station mobile (1, 2, 3) destinée à fonctionner dans un système de radiocommunications mobiles, lequel système incorpore un contrôleur de gestion de clé de chiffrement (8) destiné à contrôler l'utilisation de clés de chiffrement par la/les station(s) mobile(s) du système pour le chiffrement ou le déchiffrement de transmissions radio, la station mobile comprenant : des moyens permettant à un utilisateur ou à la station mobile d'initier la suppression d'une clé de chiffrement ; et **caractérisé en ce qu'**elle comprend : des moyens permettant de tenter d'envoyer un ou plusieurs rapports de suppression de clé de chiffrement au contrôleur de gestion de clé (8) en réponse à cet événement d'initiation de suppression.

39. Station mobile selon la revendication 38, dans laquelle le rapport ou un ou plusieurs des rapports comprend/comprennent une indication de suppression réussie, indiquant que la clé de chiffrement a bien été supprimée.

40. Station mobile selon la revendication 38, dans laquelle le rapport ou un ou plusieurs des rapports comprend/comprennent une indication d'échec de suppression, indiquant que la clé n'a pas été supprimée.

41. Station mobile (1, 2, 3) selon l'une quelconque des revendications 38 à 40, dans laquelle l'initiation de la suppression de la clé comprend l'initiation de la suppression de la clé de chiffrement de communication présentement utilisée pour chiffrer les communications sur le système de radiocommunications.

42. Station mobile selon l'une quelconque des revendications 38 à 41, dans laquelle l'initiation de la suppression de la clé comprend l'initiation de la suppression de toutes les clés de chiffrement stockées par la station mobile (1, 2, 3).

43. Station mobile selon l'une quelconque des revendications 38 à 41, dans laquelle la station mobile (1, 2, 3) comporte des moyens permettant d'initier en option la suppression d'une ou plusieurs clés de chiffrement de la station mobile.

44. Station mobile selon l'une quelconque des revendications 38 à 43, dans laquelle les moyens permettant de tenter d'envoyer un ou plusieurs rapports de suppression de clé tentent de façon répétée d'envoyer un rapport de suppression de clé jusqu'à ce qu'un accusé de réception du rapport soit reçu depuis le contrôleur de gestion de clé.

45. Station mobile selon l'une quelconque des revendications 38 à 44, comprenant en outre un compteur qui compte le nombre de tentatives d'envoi d'un rapport de suppression de clé et, après un nombre prédéterminé de tentatives d'envoi du rapport sans recevoir d'accusé de réception, arrête l'envoi du rapport par la station mobile.

46. Station mobile selon l'une quelconque des revendications 38 à 45, comprenant en outre des moyens permettant de chiffrer le rapport de suppression de clé en utilisant la clé de chiffrement à supprimer avant de supprimer la clé de chiffrement.

47. Station mobile selon l'une quelconque des revendications 38 à 46, comprenant en outre une mémoire permettant de stocker le point courant dans la procédure de suppression de clé.

48. Station mobile selon la revendication 47, dans laquelle la mémoire indique lorsque l'alimentation électrique est allumée ou restaurée pour la station mobile si la station mobile avait avancé dans une procédure de suppression de clé et comprenant des moyens permettant de reprendre la procédure de suppression de clé dans ce cas.

49. Station mobile selon l'une quelconque des revendications 38 à 48, comprenant en outre des moyens permettant d'indiquer à un utilisateur qu'un rapport de suppression de clé a été reçu par le contrôleur de gestion de clé (8) en réponse à un accusé de réception reçu par la station mobile (1, 2, 3) en provenance du contrôleur de gestion de clé.

50. Station mobile selon l'une quelconque des revendications 38 à 49, comprenant en outre des moyens permettant de rechercher une confirmation auprès de l'utilisateur avant de supprimer une clé de chiffrement.

51. Station mobile selon l'une quelconque des revendications 38 à 50, comprenant en outre des moyens permettant d'ignorer des commandes d'arrêt de l'alimentation électrique pendant une procédure de suppression de clé.

52. Système de radiocommunications mobiles selon l'une quelconque des revendications 29 à 37, dans lequel les rapports de suppression de clé de chiffrement contiennent une indication du moment auquel la station mobile respective a supprimé la clé et le contrôleur de gestion de clé (8) comporte des moyens permettant de déterminer s'il faut ou non remplacer ou écarter la clé de chiffrement supprimée sur la base de la différence entre l'indication temporelle dans le rapport et le moment où le rapport est reçu par le contrôleur de gestion de clé.
